# EUROPEAN PATENT APPLICATION

(11) **EP 2 081 348 A1**
(43) Date of publication of application: **22.07.2009**
(21) Application number: 07817255.8
(22) Date of filing: 15.11.2007
(51) Int. Cl.: H04L 29/06

(54) **MESSAGE INTERWORKING METHOD, SYSTEM, ENTITY AND MESSAGE DELIVERY REPORT PROCESSING METHOD, SYSTEM, THE ENTITY, TERMINAL FOR MESSAGE INTERWORKING**

(30) Priority: 15.11.2006 CN 200610146681; 11.12.2006 CN 200610162313; 03.08.2007 CN 200710143853
(71) Applicant: Huawei Technologies Co., Ltd., Shenzhen, Guangdong Province 518129 (CN)
(72) Inventor: CHEN, Fang, Shenzhen Guangdong 518129 (CN); SUN, Chengzhen, Shenzhen Guangdong 518129 (CN); DUAN, Xiaoqin, Shenzhen Guangdong 518129 (CN)
(74) Representative: Körber, Martin Hans
(86) International application number: PCT/CN2007/071065
(87) International publication number: WO 2008/058487

(57) **Abstract**

The message interworking method and system of SIP message and conventional short message, using an entity SMI AS for message interworking to execute the authorization of the interworking service of SIP message and conventional network message, to transform the message format and to store and forward the message. Herein, SMI AS can be a new added network entity, or a new added function module in the exiting network entity, and it provides service for users by the third registration of users. Applying present invention enables the IMS-only terminal, which does not support the conventional short message service, to achieve the interworking of the message service with the conventional terminal, enriching the variety of the service. The entity for message interworking is also provided. Additionally, a message delivery report processing method and system are also provided.; Applying present invention solves the exiting problem that how to send the message delivery report when the SIP message service interworks with the conventional short message service, and enables the users of the SIP message service to request the called user terminal and return the message delivery report, and thus to ensure the consistency of users' experience. A transforming method between SIP message, report and conventional short message, delivery report and an entity and a terminal for message interworking are also provided.

## Description

This application claims priorities to Chinese patent application No. 200610146681.8 filed with the Chinese patent office on November 15, 2006 and entitled "Method and System for Interworking between SIP Message and Conventional Short message as Well as Entity for Message Interworking", Chinese patent application No. 200610162313.2 filed with the Chinese patent office on December 11, 2006 and entitled "Method and System for Processing Message Transmission Report as Well as Entity and Terminal for Message Interworking", Chinese patent application No. 200710143853.0 filed with the Chinese patent office on August 3, 2007 and entitled "Method, System and Terminal for Message Interworking", the contents of which are incorporated herein by reference in their entireties.

### Field of the Invention

The invention relates to the field of communication technologies, and in particular, to a method and system for interworking between a Session Initiation Protocol (SIP) message and a conventional short message, an entity for message interworking, as well as a method and system for processing message delivery reports during interworking between a SIP message and a conventional short message.

### Background of the Invention

Internet Protocol Multimedia Subsystem (IMS) is a subsystem supporting IP multimedia services, which is presented by 3GPP Release 5. IMS utilizes the SIP protocol's independence upon access, and therefore is a multimedia control/ call control platform over the IP domain, supporting the multimedia services of both the session types and non-session types. IMS provides a general service enabling platform for the future multimedia applications, which represents a significant stride in the evolving towards the architecture for providing all IP network services. With the birth and development of IMS-based access technologies, it attracts more and more concerns of the operators and has become a target of the 3GPP standard groups to convert the existing message services of conventional mobile terminals into the services that can be provided by IMS terminals so as to achieve the interworking between the SIP-based message services based on the IMS architecture, such as the Immediate Messaging and Session Based Messaging defined in 3GPP and the Session Initiation Protocol for Instant Messaging and Presence Leveraging Extensions (SIMPLE) defined by OMA, and conventional message services, such as the Short Message Service (SMS) and Enhanced short Message Service (EMS) defined by 3GPP, without as less changes as possible to the existing function entities and protocols for short message services over the mobile networks.

The EMS defined by 3GPP is an enhancement of SMS. To simplify the description below, the short messages within the conventional Circuit Switched (CS)/Packet Switched (PS) domains mentioned hereinafter are supposed to include the message services of both the two types, i.e. SMS and EMS.

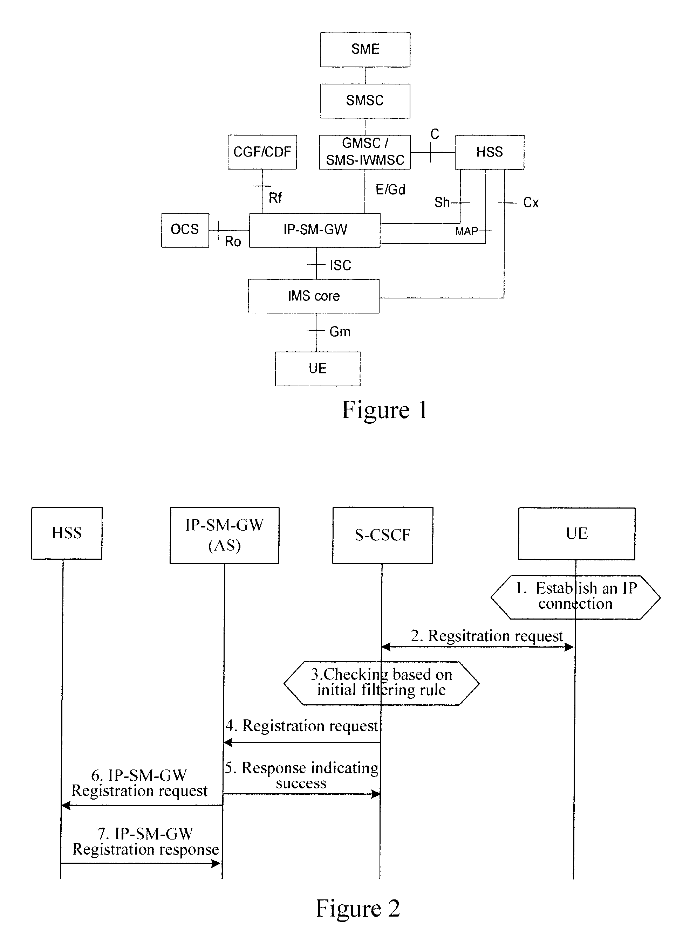

Figure 1 illustrates the current network framework for implementing conventional short message services using IP terminals presented by 3GPP. In the framework, the Short Message Entity (SME), the Short Message Service Center (SM-SC), the Gateway Mobile Switching Center (GMSC) /Short Message Service Interworking Mobile Switching Center (SMS-IWMSC), the Home Subscriber Server (HSS) /Home Location Register (HLR) are function entities for short message services (SMS) in the existing mobile networks. The SM-SC is adapted to store short messages. The GMSC is adapted to inquire the HSS/HLR about the routing information when terminals receive the short messages. The SMS-IWMSC is adapted to authenticate when the terminals send the short messages. The short message centers applied in the current networks are equipment integrating the SM-SC, the GMSC and the SMS-IWMSC together. In other words, the three function entities generally are not implemented as separate devices. Therefore, the short message center or conventional short message center in the following description indicates the equipment that integrates the SM-SC, the GMSC and the SMS-IWMSC together, except declared otherwise. The HSS/HLR is adapted to store data information of users, including the data of subscription services and routing information of the users. The network framework as shown in Figure 1 may further include a Charging Gateway Function (CGF)/ Charging Data Function (CDF) and an Online Charging System (OCS). The CGF/CDF is adapted to collect and process the off-line charging data record information for the users, and transfer the processed information to a charging center. The OCS is adapted to collect and process the on-line charging data record information for the users, and transfer the processed information to the charging center. As shown in Figure 1, an IP message gateway (IP-Message-GW or IP-SM-GW) is adapted to implement the communication between an IP client and the GMSC/SMS-IWMSC, which needs the interworking between the IP network messaging protocols (i.e. IP-based communication protocols utilized between an IP terminal and an IP-Message-GW) and the existing short message protocols for WCDMA/GSM networks (i.e. the Mobile Application Part (MAP) protocol used between the IP-Message-GW and the GMSC/SMS-IWMSC, which is similar to the MAP protocol used between the GMSC/SMS-IWMSC and the MSC, Serving GPRS Support Node (SGSN) in the existing process of implementing short message services). When a user supporting IP access utilizes a short message service, the user is required to register onto an IP-SM-GW. The IP-SM-GW notifies the registration of the user as well as the address of the IP-SM-GW to the HSS. The HSS saves the status of the user as "IP Connected", and stores the address of the IP-SM-GW onto which the user is registered.

The existing specifications present the message interworking on the transport level between the IMS message services and the conventional short message services, in which the IP-SM-GW serves as a gateway for bearing the short message interworking between the IMS domain and the conventional CS/PS domain. The IP-SM-GW may package and un-package short messages, and forward the packaged and un-packaged short messages. In addition, when receiving a message, the IP-SM-GW may select a corresponding domain for routing according to a preset policy, such as the policy of an operator and the preference of a user.

For the conciseness of the following description, hereinafter the services for SIP-based messages within the IMS domain (or IMS core network) are referred to as SIP messages, and the services for short messages within the conventional CS/PS domain are referred to as conventional short messages.

Figure 2 is a schematic diagram illustrating a registration procedure for transport level interworking between the SIP messages and the conventional short messages.

Step 1. A User Equipment (UE), i.e. an IP client, establishes an IP connection.

Step 2. When the IP connection is established, the user registers onto a Service Call Session Control Function (S-CSCF) entity through an IMS registration procedure.

Step 3. During the registration, the S-CSCF checks according to an initial filtering rule downloaded from an HSS. The initial filtering rule is specified in the existing protocols, and is not described herein. Hereinafter, the initial filtering rule is referred to as the first initial filtering rule.

Step 4. When the IMS registration is successful, the S-CSCF notifies a registration status of the user to an IP message gateway based on the first initial filtering rule.

Step 5. The IP message gateway returns a response indicating success to the S-CSCF.

Step 6. The IP message gateway sends a third party registration request message to the HSS.

Step 7. The HSS stores the received third party registration request message and returns a registration response of IP Interworking Function (IP-IWF) to the IP message gateway. The registration response may include subscription data related with service provision.

In this way, the UE is registered onto the IP message gateway, and the IP message gateway obtains the subscription data related with service provision from the HSS.

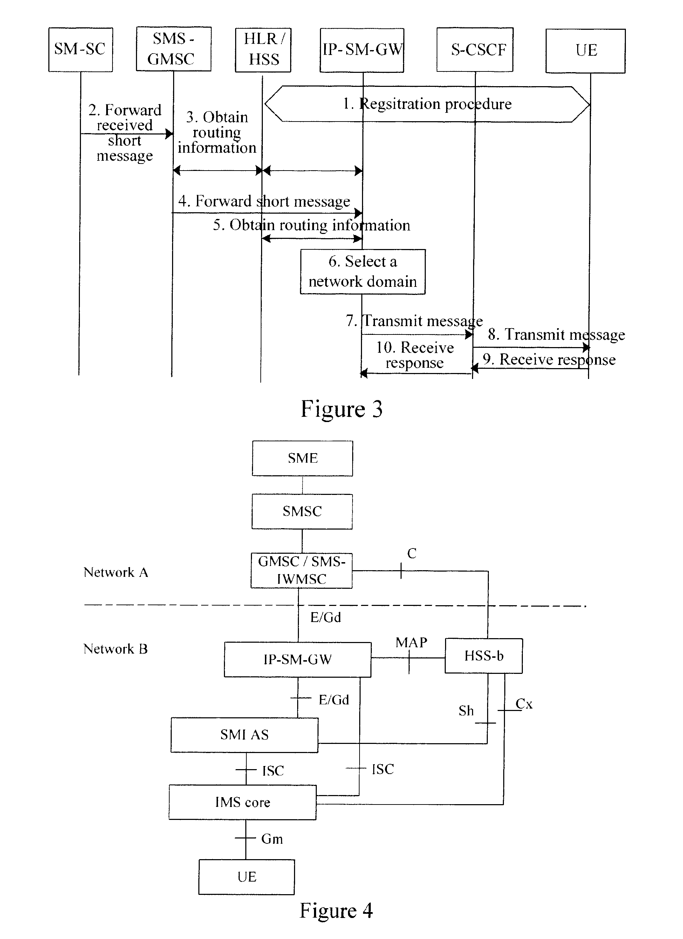

Figure 3 illustrates a Message Termination (MT) procedure for transport level interworking between the SIP messages and the conventional short messages after the registration. As shown in Figure 3, the MT procedure is as follows.

Step 1. The user registers onto the S-CSCF through an IMS registration procedure.

Step 2. An SM-SC forwards a received short message to an SMS-GMSC.

Step3. The SMS-GMSC sends a routing information request to the HSS. The HSS/HLR forwards the outing information request to the IP message gateway. The IP message gateway returns a routing information response message to the SMS-GMSC. In the routing information response message, the address of the IP message gateway is used as routing information.

Step 4. The SMS-GMSC forwards the short message to the IP message gateway according to the routing information contained in the received routing information response message. This procedure is similar to the procedure of the SMS-GMSC forwarding a message to an MSC or SGSN in the conventional short message transmission mechanism.

Step 5. When receiving the short message forwarded from the SMS-GMSC, the IP message gateway sends a routing request to the HSS/HLR to obtain address information of the MSC and/or SGSN from the HSS/HLR.

Step 6. The IP message gateway selects a network domain, i.e. selects an appropriate route based on a preset policy, such as a policy of an operator and the preference of the user, so as to transmit the short message.

In the embodiment, the selected route is supposed to be in the IMS domain.

Step 7. If the selected route is in the IMS domain, the IP message gateway converts the phone number (e.g. Mobile Station international ISDN number, MSISDN) of a called user contained in the received short message into the Tel Uniform Resource Identifier (TEL-URI) format, packages the short message in a SIP message and forwards the SIP message to the S-CSCF.

Step 8. The S-CSCF forwards the SIP message packaged with the short message to a user terminal.

Step 9. The user terminal returns a response indicating the success of receipt of the message to the S-CSCF.

Step 10. The S-CSCF returns a response indicating the success of receipt of the message to the IP message gateway.

In the above solution for interworking of message services between the IMS network and the conventional network, the IP message gateway functions as a gateway for bearing the short message interworking between the conventional short messages and the SIP-based messages. In other words, the IP message gateway packages a short message borne within MAP signaling into a message of SIP signaling and transmits the message of SIP signaling to the called user via the IMS core network (IMS core). In addition, the IP message gateway un-packages a short message borne within a message of SIP signaling, converts it into MAP signaling and transmits the MAP signaling to the called user via the conventional network domain, such as the CS/PS domain. The IP message gateway may download the related routing information for message forwarding from the HSS/HLR. Furthermore, the IP message gateway has the functions of network domain selection and message routing. In this way, the short messages may be sent to the IP message gateway in any cases. The IP message gateway may select a corresponding domain according to the policy of the operator and the preference setting of the user and route the short message to the selected domain so as to deliver the short message to the called user terminal.

The above described transport level interworking is totally based on the packaging formats, and therefore can be implemented only when the IMS user terminal supports the conventional short message protocol stacks. The above described transport level interworking, in which SIP is used as only a bearing for short messages, is not a true interworking between the SIP messages and the conventional short messages. The short message protocols supported by the terminals in the mobile networks so that the terminals can utilize the short message services. However, the IMS terminals in the fixed networks probably do not support the short message protocols defined for the mobile networks, i.e. the IMS terminals in the fixed networks support only the SIP-based message services. In addition, with the evolving of the network technologies, IMS terminals in new mobile networks probably support only the SIP-based message services, but do not support the conventional short message services. In such cases, it is hard to implement the interworking of message services between the IMS user terminals based on the SIP message services and the conventional user terminals.

In addition, the problem of processing the message delivery reports during the interworking between the SIP-based message services and the conventional short message services has not been addressed yet in the existing technologies. For example, for a user of the conventional short messages, the short message center requires the UE of the user to return a report indicating the success of message transmission (e.g. Delivery report) or a report indicating the failure of message transmission (e.g. Failure report). However, the called UE (e.g. an IMS user) does not support the SMS/EMS protocol stacks, the message delivery report can not be returned to the short message center, thereby adversely affecting the consistency experience of the user for the message services. The requirement of returning a message delivery report by the users of SIP-based message services has not been considered yet in the existing technologies.

### Summary of the Invention

Various embodiments of the invention provide a message interworking method and system for interworking between SIP messages and conventional short messages, as well as a message interworking entity, to enable the interworking of message services between the IMS terminals not supporting the conventional short messages and the conventional terminals.

In addition, some embodiments of the invention provide a method and system for processing message delivery reports, as well as an entity and terminal for message interworking, to solve the problem of sending a message delivery report during the interworking between the SIP-based message services and the conventional short message services.

The following are solutions according to the embodiments of the invention.

An embodiment of the invention provides a method for interworking between Session Initiation Protocol (SIP) messages and conventional short messages. In an originating procedure of an Internet Protocol Multimedia Subsystem (IMS) domain, the method may include:
receiving, by a Service Call Session Control Function (S-CSCF), a SIP-based message from a User Equipment (UE), and transmitting the SIP-based message to an Internet Protocol (IP) message gateway when determining that the SIP-based message needs to be transmitted to the IP message gateway; and
converting, by the IP message gateway, the received SIP-based message into a conventional short message, and transmitting the conventional short message converted from the SIP-based message to a conventional short message system.

An embodiment of the invention provides a method for processing message delivery reports during interworking between Session Initiation Protocol (SIP) messages and conventional short messages according to the above method. The method for processing message delivery reports may include:
receiving, by an entity for message interworking, a SIP-based message containing a request message delivery indicator from a calling Internet Protocol Multimedia Subsystem (IMS) user equipment, converting the received SIP-based message into a conventional short message, and transmitting the conventional short message converted from the SIP-based message to a short message center;
forwarding, by the short message center, the conventional short message to a called user equipment, receiving a message delivery report based on the format of conventional short message, and transmitting the received message delivery report based on the format of conventional short message to the entity for message interworking; and
converting, by the entity for message interworking the received message delivery report based on the format of conventional short message into a SIP-based message delivery report, and transmitting the SIP-based message delivery report to the calling IMS user equipment.

An embodiment of the invention provides a method for interworking between Session Initiation Protocol (SIP) messages and conventional short messages. In a terminating procedure of an Internet Protocol Multimedia Subsystem (IMS) domain, the method may include:
receiving, by an Internet Protocol (IP) message gateway, a conventional short message from a conventional short message system, selecting an IMS domain for message forwarding according to a preset policy; and
converting, by the IP message gateway, the received conventional short message into a SIP-based message, and transmitting the SIP-based message converted from the conventional short message to an user equipment via the IMS domain.

An embodiment of the invention provides a method for processing message delivery reports during interworking between Session Initiation Protocol (SIP) messages and conventional short messages according to the above method. The method for processing message delivery reports may include:
receiving, by an entity for message interworking, a conventional short message from a short message center, converting the received conventional short message into a SIP-based message containing a request message delivery indicator and transmitting the SIP-based message to a called IMS user equipment;
constructing, by the called IMS user equipment, a SIP-based message delivery report containing status information when receiving the SIP-based message containing the request message delivery indicator, and sending the SIP-based message delivery report to the entity for message interworking; and
converting, by the entity for message interworking, the received SIP-based message delivery report into a message delivery report based on the format of conventional short message, and transmitting the message delivery report based on the format of conventional short message to the short message center.

An embodiment of the invention provides a method for interworking between Session Initiation Protocol (SIP) messages and conventional short messages. In an originating procedure of an Internet Protocol Multimedia Subsystem (IMS) domain, the method may include:
receiving, by a Service Call Session Control Function (S-CSCF), a SIP-based message from a User Equipment (UE), and transmitting the SIP-based message to a Short Message/IMS messaging Interworking Application Server (SMI AS) when determining that the SIP-based message needs to be transmitted to the SMI AS; and
converting, by the SMI AS, the received SIP-based message into a conventional short message, and transmitting the conventional short message converted from the SIP-based message to a conventional short message system.

An embodiment of the invention provides a method for interworking between Session Initiation Protocol (SIP) messages and conventional short messages. In a terminating procedure of an Internet Protocol Multimedia Subsystem (IMS) domain, the method may include:
I) receiving, by an Internet Protocol (IP) message gateway (IP-SM-GW), a conventional short message from a conventional short message system, obtaining routing information from a Home Subscriber Server (HSS), selecting an IMS domain for message forwarding according to a policy of an operator or user preference, converting the received conventional short message into a SIP-based message and transmitting the SIP-based message converted from the conventional short message;
II) transmitting, by the IP message gateway, the SIP-based message to a configured Short Message/IMS messaging Interworking Application Server (SMI AS) when checking that the SIP-based message to the SMI AS; and
III) converting, by the SMI AS, the received conventional short message into a SIP-based message and transmitting the SIP-based message converted from the conventional short message to a user equipment via the IMS domain.

J An embodiment of the invention provides a system for interworking between Session Initiation Protocol (SIP) messages and conventional short messages. The system may include a conventional short message system, an Internet Protocol Multimedia Subsystem (IMS) core network, an Internet Protocol (IP) message gateway, and user equipments. The system may further include a message interworking entity (e.g. a Short Message/IMS messaging Interworking Application Server (SMI AS)) for message format conversion.

The IMS core network is adapted to receive a SIP-based message from a user equipment, and transmitting the SIP-based message to the SMI AS when determining that the SIP-based message needs to be transmitted to the SMI AS.

The IP message gateway is adapted to receive a conventional short message from the conventional short message system, select the IMS core network for message forwarding according to a policy of an operator or user preference.

The SMI AS is adapted to convert the received SIP-based message into a conventional short message and transmit a conventional short message converted from the SIP-based message to the conventional short message system; and is adapted to convert a received conventional short message into a SIP-based message and transmit the SIP-based message converted from the conventional short message to a called user equipment.

An embodiment of the invention provides a system for interworking between Session Initiation Protocol (SIP) messages and conventional short messages. The system may include a conventional short message system, an Internet Protocol Multimedia Subsystem (IMS) core network, and user equipments. The system may further include an Internet Protocol (IP) message gateway capable of message format conversion.

The IMS core network is adapted to receive a SIP-based message from a user equipment, and transmit the SIP-based message to the IP message gateway when determining that the SIP-based message needs to be transmitted to the IP message gateway.

The IP message gateway is adapted to convert the received SIP-based message into a conventional short message and transmit a conventional short message converted from the SIP-based message to the conventional short message system; and is adapted to convert a received conventional short message into a SIP-based message and transmit the SIP-based message converted from the conventional short message to a called user equipment via the IMS core network.

An embodiment of the invention provides a system for interworking between Session Initiation Protocol (SIP) messages and conventional short messages. The system may include a conventional short message system, an Internet Protocol Multimedia Subsystem (IMS) core network, and user equipments. The system may further include a message interworking entity, SMI AS, capable of massage format conversion.

The SMI AS is adapted to connect to the IMS core network via an ISC interface.

The SMI AS is adapted to exchange messages with a conventional short message system in a calling network when an IMS domain of the SMI AS is used as an originating domain; and to exchange messages with a conventional short message system in a called network when an IMS domain of the SMI AS is used as a terminating domain.

An embodiment of the invention provides a message interworking entity. The message interworking entity may include a storing and forwarding module, a message converting module and a service authorization module.

The storing and forwarding module is adapted to receive a message from a network side and send a service authorization request to the service authorization module; to receive an authorization response indicating a successful authorization from the service authorization module and forward the message from the network side to the message converting module; to receive a message returned from the message converting module, determine the format of the message returned from the message converting module, and deliver the message returned from the message converting module to a network side capable of processing the format of the message.

The service authorization module is adapted to check subscription information of a user when receiving the service authorization request and return an authorization response to the storing and forwarding module.

The message converting module is adapted to receive the message forwarded from the storing and forwarding module, convert the format of the message forwarded from the storing and forwarding module, and return a message in the converted format to the storing and forwarding module.

An embodiment of the invention provides a message interworking entity. The message interworking entity may include a storing and forwarding module, a message converting module and a service authorization module.

The storing and forwarding module is adapted to send a service authorization request to the service authorization module when receiving a conventional short message from a conventional short message domain; to receive an authorization response indicating a successful authorization from the service authorization module and forward the received conventional short message to the message converting module; to forward a conventional short message from the message converting module to the conventional short message domain when receiving the conventional short message from the message converting module.

The service authorization module is adapted to check subscription information of a user when receiving a service authorization request and return an authorization response to the storing and forwarding module or the message converting module.

The message converting module is adapted to receive the conventional short message forwarded from the storing and forwarding module, convert the conventional short message forwarded from the storing and forwarding module into a SIP-based message, and forward the SIP-based message converted from the conventional short message forwarded from the storing and forwarding module to an IMS domain, and to receive a SIP-based message from the IMS domain and send a service authorization request to the service authorization module, receive an authorization response indicating a successful authorization returned from the service authorization module, convert the SIP-based message from the IMS domain into a conventional short message and transmit the conventional short message converted from the SIP-based message from the IMS domain to the storing and forwarding module.

An embodiment of the invention provides a system for processing message delivery reports during interworking between Session Initiation Protocol (SIP) messages and conventional short messages. The system for processing message delivery reports may include a user equipment in an Internet Protocol Multimedia Subsystem (IMS) domain, a user equipment supporting conventional short messages, an entity for message interworking and a short message center.

When the user equipment in the IMS domain is calling:

The entity for message interworking is adapted to receive a SIP-based message containing a request message delivery indicator from the calling user equipment in the IMS domain, convert the received SIP-based message into a conventional short message, and transmit the conventional short message, converted from the SIP-based message and containing information indicating that the calling user equipment requests to receive a message delivery report, to the short message center; receive a message delivery report based on a conventional short message, convert the message delivery report based on the format of conventional short message into a SIP-based message delivery report, and send the SIP-based message delivery report to the calling user equipment.

The short message center is adapted to forward the conventional short message to a called user equipment, receive a message delivery report based on the format of conventional short message, and transmit the received message delivery report based on the format of conventional short message to the entity for message interworking.

When the user equipment in the IMS domain is called:

The entity for message interworking is adapted to convert a conventional short message, when receiving the conventional short message from a short message center, into a SIP-based message containing a request message delivery indicator and transmit the SIP-based message to a called user equipment in the IMS domain; receive a SIP-based message delivery report containing status information and convert the SIP-based message delivery report containing the status information into a message delivery report based on the format of conventional short message, and transmit the message delivery report based on the format of conventional short message to the short message center.

The called user equipment in the IMS domain is adapted to construct the SIP-based message delivery report containing the status information when receiving the SIP-based message containing the request message delivery indicator, and send the SIP-based message delivery report to the entity for message interworking.

An embodiment of the invention provides an entity for message interworking. The entity for message interworking may include an information receiving unit, a format converting and controlling unit and an information transmitting unit.

The information receiving unit is adapted to receive a SIP-based message containing a request message delivery indicator from a calling user equipment in an IMS domain, and send the received SIP-based message to the format converting and controlling unit; to receive a message delivery report based on the format of conventional short message and send the message delivery report based on the format of conventional short message to the format converting and controlling unit.

The format converting and controlling unit is adapted to convert the received SIP-based message into a conventional short message, and transmit a conventional short message, converted from the SIP-based message and containing information indicating that the calling user equipment requests to receive a message delivery report, to the information transmitting unit; to convert the received message delivery report based on the format of conventional short message into a SIP-based message delivery report, and send the SIP-based message delivery report to the information transmitting unit.

The information transmitting unit is adapted to transmit the conventional short message converted from the SIP-based message to a short message center; and to transmit the SIP-based message delivery report to the calling user equipment.
Alternatively :

The information receiving unit is adapted to receive a conventional short message from the short message center and send the received conventional short message to the format converting and controlling unit; to receive a SIP-based message delivery report containing status information and send the SIP-based message delivery report to the format converting and controlling unit.

The format converting and controlling unit is adapted to convert the received conventional short message into a SIP-based message containing a request message delivery indicator, and transmit the SIP-based message converted from the conventional short message to the information transmitting unit; to convert the received SIP-based message delivery report into a message delivery report based on the format of conventional short message, and send the message delivery report based on the format of conventional short message to the information transmitting unit.

The information transmitting unit is adapted to transmit the SIP-based message converted from the conventional short message to the called user equipment; and to transmit the message delivery report based on the format of conventional short message to the short message center.

An embodiment of the invention provides a user equipment. The user equipment may include a transmitting and receiving unit and a constructing unit.

The transmitting and receiving unit is adapted to receive a Session Initiation Protocol (SIP) message containing a request message delivery indicator and send the SIP message to the constructing unit; to receive a SIP-based message delivery report from the constructing unit and transmit the message delivery report.

The constructing unit is adapted to construct the SIP-based message delivery report containing status information according to the received SIP message and send the constructed message delivery report to the transmitting and receiving unit.

In the solutions of the invention, an entity for message interworking, e.g. an SMI AS, is used to authorize the interworking services between SIP-based messages and conventional network messages, convert the formats of the messages, and store and forward the messages. The SMI AS may be a newly added network entity, or may be a new module added in an existing network entity. The SMI AS may provide services to a user via the third party registration of the user. With the solutions, a pure IMS user equipment which does not support the conventional short message services may be enabled to implement interworking of message services with a conventional user equipment, thereby enriching the types of services.

In addition, the solutions of the invention may solve the problem of delivering the message delivery reports during interworking between the SIP-based message services and the conventional short message services. In this way, a user of SIP-based message services is enabled to request a called user equipment, including a user equipment of conventional short messages and a user equipment SIP-based message services, to return a message delivery report, thereby ensuring the consistency of user experience. Further, the short message center can receive the message delivery report normally even in the case the called does not support SMS/EMS protocol stacks, i.e. in the case that the called user equipment does not support the conventional short messages.

### Brief Description of the Drawings

Figure 1 is a schematic diagram illustrating the current network framework for implementing conventional short message services using IP terminals presented by 3GPP;

Figure 2 is a schematic diagram illustrating a registration procedure for transport level interworking between the SIP messages and the conventional short messages;

Figure 3 is a schematic diagram illustrating a message termination (MT) procedure for transport level interworking between the SIP messages and the conventional short messages;

Figure 4 is a schematic diagram illustrating an architecture for interworking between SIP messages and conventional short messages according to a first embodiment of the invention;

Figure 5 is a schematic diagram illustrating a registration procedure for service level interworking of message services between a user of an IMS network and a user of a conventional network according to a first embodiment of the invention;

Figure 6 is a schematic diagram illustrating an IMS-MO (Message Originating) procedure for service level interworking between SIP messages and conventional short messages based on the architecture as shown in Figure 4;

Figure 7 is a schematic diagram illustrating an IMS-MT procedure in a transparent mode for service level interworking between SIP messages and conventional short messages based on the architecture as shown in Figure 4;

Figure 8 is a schematic diagram illustrating an IMS-MT procedure in a non-transparent mode for service level interworking between SIP messages and conventional short messages based on the architecture as shown in Figure 4;

Figure 9 is a schematic diagram illustrating the returning of a delivery report in the IMS-MT procedures based on the architecture as shown in Figure 4;

Figure 10 is a schematic diagram illustrating the structure of a message interworking entity according to an embodiment of the invention;

Figure 11 is a schematic diagram illustrating a processing procedure of the storing and forwarding module as shown in Figure 10;

Figure 12 is a schematic diagram illustrating a processing procedure of the service authorization module as shown in Figure 10;

Figure 13 is a schematic diagram illustrating a processing procedure of the message converting module as shown in Figure 10;

Figure 14 is a schematic diagram illustrating the structure of a message interworking entity according to another embodiment of the invention;

Figure 15 is a schematic diagram illustrating a processing procedure of the storing and forwarding module when converting a conventional short message into a SIP message on the service level based on the structure as shown in Figure 14;

Figure 16 is a schematic diagram illustrating a processing procedure of the service authorization when converting a conventional short message into a SIP message on the service level based on the structure as shown in Figure 14;

Figure 17 is a schematic diagram illustrating a processing procedure of the message converting module when converting a conventional short message into a SIP message on the service level based on the structure as shown in Figure 14;

Figure 18 is a schematic diagram illustrating a processing procedure of the storing and forwarding module when converting a SIP message into a conventional short message on the service level based on the structure as shown in Figure 14;

Figure 19 is a schematic diagram illustrating a processing procedure of the service authorization when converting a SIP message into a conventional short message on the service level based on the structure as shown in Figure 14;

Figure 20 is a schematic diagram illustrating a processing procedure of the message converting module when converting a SIP message into a conventional short message on the service level based on the structure as shown in Figure 14;

Figure 21 is a schematic diagram illustrating an architecture for interworking between SIP messages and conventional short messages according to a second embodiment of the invention;

Figure 22 is a schematic diagram illustrating an IMS-MO procedure for interworking of the service level between SIP messages and conventional short messages based on the framework as shown in Figure 21;

Figure 23 is a schematic diagram illustrating a processing procedure of an IP short message gateway according to the procedure as shown in Figure 22;

Figure 24 is a schematic diagram illustrating an IMS-MT procedure for interworking of the service level between SIP messages and conventional short messages based on the framework as shown in Figure 21;

Figure 25 is a schematic diagram illustrating a processing procedure of an IP short message gateway according to the procedure as shown in Figure 24;

Figure 26 is a schematic diagram illustrating the returning of a delivery report in the IMS-MT procedure based on the framework as shown in Figure 21;

Figure 27 is a schematic diagram illustrating the processing of a message delivery report in the IMS user equipment termination (IMS-MT) procedure based on the framework as shown in Figure 21;

Figure 28 is a schematic diagram illustrating the processing of another message delivery report in the IMS message originating (IMS MO) procedure based on the framework as shown in Figure 21;

Figure 29 is a schematic diagram illustrating an architecture for interworking between SIP messages and conventional short messages according to a third embodiment of the invention;

Figure 30 is a schematic diagram illustrating an IMS-MT procedure in a transparent mode for interworking of the service level between SIP messages and conventional short messages based on the architecture as shown in Figure 29; and

Figure 31 is a schematic diagram illustrating an architecture for interworking between SIP messages and conventional short messages according to a fourth embodiment of the invention.

### Detailed Description of the Embodiments

Some embodiments of the invention provide a system and method for interworking between message services of an IMS network and a conventional network, as well as a message interworking entity, which may be applied to the scenarios that an IP client based on an IP access mobile network utilizes message services based on an IMS domain. In the embodiments of the invention, an entity for message interworking, e.g. a Short Message/IMS messaging Interworking Application Server (SMI AS) is used to authenticate the message interworking services between SIP-based messages and conventional short messages, convert the formats of messages, and store and forward the messages. The SMI AS may be a newly added network entity, or may be a new functional module added in an existing network entity, such as an IP-SM-GW. The SMI AS may provide services to a user via the third party registration of the user. The S-CSCF may initiate a third party registration to the SMI AS only in the case that a user has subscribed for the service level interworking and the current user equipment does not support the SMS protocol stacks.

In addition, in the embodiments of the invention, the entity for message interworking (e.g. SMI AS), as an entity for message transmission and interworking reporting for the users of conventional short message and the users of SIP-based messages in the IMS domain, is responsible for the mutual conversion between messages borne over SIP signaling and messages borne over MAP signaling and the mutual conversion between message delivery reports borne over SIP signaling and message delivery reports borne over MAP signaling, thereby achieving a seamless processing of message delivery reports of SIP-based message services and conventional short messages. In this way, the consistency of user experience may be ensured.

Because the invention is directed mainly to the interworking of message services between an IMS network and a conventional network, hereinafter it is supposed that one of calling and called user equipments is a user equipment in the IMS network while the other of the calling and called user equipments is user equipment in the conventional network.

The invention is described below in conjunction with the figures and some embodiments of the invention.

**First Embodiment:**

The SMI AS and the IP-SM-GW are two entities independent from each other.

In the IMS domain Message Originating procedure (IMS MO procedure) of the solution, a user forwards a SIP-based message via an IMS domain to an S-CSCF. The S-CSCF functions according to an initial filtering rule. If the SIP-based message is routed to the SMI AS, the SMI AS converts the SIP-based message into a conventional short message in the case that the service authorization is successful, and delivers the conventional short message converted from the SIP-base message to a conventional short message system. Otherwise, the S-CSCF transfers the SIP-based message according to the requirements of the existing IMS domain.

Here the initial filtering rule in the MO procedure may be called as the second initial filtering rule. The checking of the second initial filtering rule may include: checking whether a feature identity of capability, referred to as "feature tag", carried in the SIP-based message is for packaged IMS message, or checking whether the calling user has subscribed for the service level interworking service, or checking whether the information identity of Communication Service Identity (CSID) carried in the SIP-based message is for the service level interworking service. If one of the results of the above checking steps is positive, the SIP-based message is routed to the SMI AS.

In the IMS domain Message Terminating procedure (IMS MT procedure) of the solution, the IP message gateway (i.e. IP-SM-GW) functions as a message router. The IP message gateway inquiries an HSS about routing information when receiving a conventional short message forwarded by a conventional routing entity. The HSS returns only the address(es) of MSC and/or SGSN. The IP message gateway may select a domain according to a preset policy, such as a policy of an operator or a user preference, based on the address information of the IMS domain obtained through the third party registration as well as the received address(es) of MSC and/or SGSN. If an IMS domain is selected, the IP message gateway packages the conventional short message in the body of a SIP message and forwards the SIP message packaged with the short message to the S-CSCF. The S-CSCF functions according to the initial filtering rule. If the user has subscribed fro the service level interworking and the current user equipment does not support the SMS protocol stacks, the SIP message is routed to the SMI AS. The SMI AS de-packages the SIP message to obtain the conventional short message, converts the conventional short message into a format purely based on SIP message and delivers the converted SIP message. Otherwise, the S-CSCF forwards the SIP message packaged with the conventional short message according to the existing technologies. Here the initial filtering rule in the MT procedure may be called as the third initial filtering rule.

Figure 4 is a schematic diagram illustrating an architecture for interworking between SIP messages and conventional short messages according to the first embodiment of the invention. The architecture may include a conventional short message system, an IMS core network, an IP message gateway, user equipments and a message interworking entity, e.g. SMI AS, for converting formats of messages newly configured in the embodiment of the invention.

The SMI AS is connected to the IP message gateway, i.e. IP-SM-GW, via an E/Gd interface, and is connected with the IMS core network via an ISC interface defined by 3GPP. The selected protocol is SIP protocol. The SMI AS may be a newly added network entity, or may be a new module added in an existing network entity.

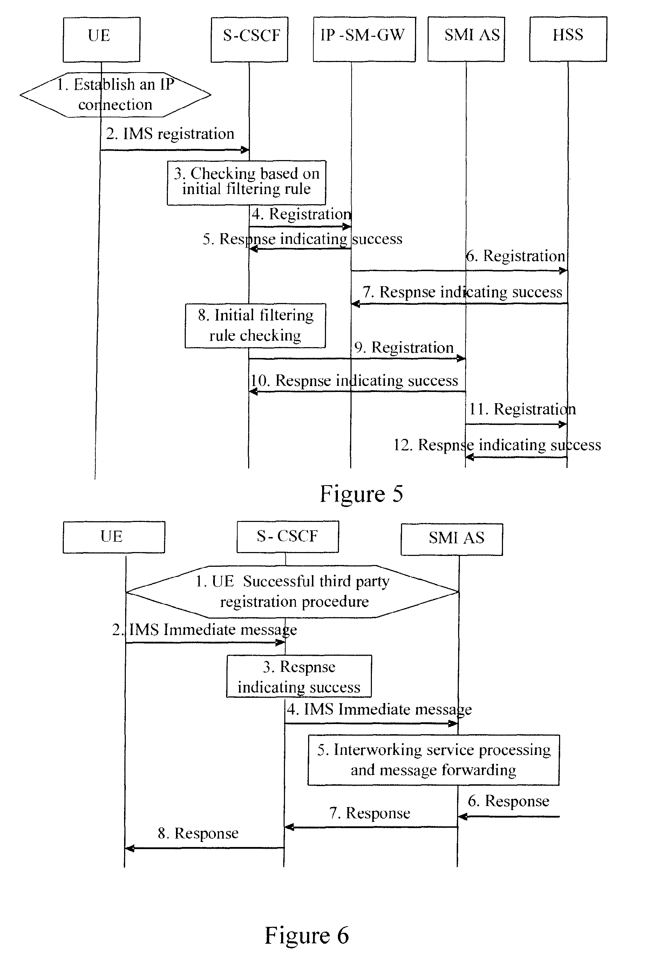

Figure 5 illustrates a registration procedure for service level interworking of message services between a user of an IMS network and a user of a conventional network when the SMI AS is separated from the IP message gateway based on the network architecture as shown in Figure 4. In the registration procedure, the third party registrations of the IP message gateway and the SMI AS can be performed in any order:

Step 1. An UE establishes an IP connection to an IMS domain.

Step 2. The UE sends an IMS registration request to an S-CSCF. The IMS registration request carries a capability feature identity (feature tag) of the user for identifying whether the UE supports the conventional short message services, i.e. whether the UE supports the SMS/EMS services.

Steps 3-7 are the same with the existing SMSIP registration procedure, i.e. the same as steps 3-7 as shown in Figure 2. Thus, these steps are not repeated herein.

Step 8. The S-CSCF checks based on the second initial filtering rule.

Step 9. According to the second initial filtering rule, the S-CSCF forwards the IMS registration request if the feature tag carried in the IMS registration request indicates that the UE does not support the conventional short message services (i.e. the SMS/EMS services) and the user has subscribed for the service level interworking service.

Step 10. The SMI AS returns to the S-CSCF a response indicating the success of the third party registration, e.g. a SIP 200 OK message.

Step 11. The SMI AS initiates a registration request to an HSS.

Step 12. The HSS saves the address of the SMI AS and received relevant information and returns to the AMI AS a response indicating success.

In this way, the UE has successfully registered in the IP-Message-GW (i.e. IP message gateway) and the SMI AS.

Figure 6 illustrates an IMS-MO (IMS Message Originating) procedure for service level interworking between SIP messages and conventional short messages after the UE has successfully registered in the IP-Message-GW and the SMI AS. As shown in Figure 6, the IMS-MO procedure is as follows:

Step 1. According to the IMS registration procedure, the UE registers in the S-CSCF. Here the other network entities such as an Interrogating Call Session Control Function (I-CSCF) and a Proxy Call Session Control Function (P-CSCF) in the IMS core network are not shown in the figure for simplicity. In addition, according to the third party registration procedures, the UE has registers on the IP message gateway and the SMI AS.

Step 2. The UE sends a SIP-based message to the S-CSCF via the IMS domain.

Step 3. The S-CSCF checks based on the second initial filtering rule upon receiving the SIP-based message, to determine whether to transmit the SIP-based message to the SMI AS. The checking may include checking by the S-CSCF the identity of a called user. If the identity of the called user is in the form of TEL URI (when the calling is an IMS user and the called is a PS/CS user), the S-CSCF performs an ENUM (Telephone Number Mapping working group) query for the called user. If the ENUM query is successful, i.e. if the TEL-URL can be converted into a SIP-URI, the S-CSCF transmits the SIP-based message to the IMS domain of the called user. The procedure for transmitting is the same as that of transmitting a SIP-based message in the existing technologies, and is not repeated herein. If the ENUM query fails, the S-CSCF continues to check the information about whether the SIP-based message is in the format of the packaged conventional short message and whether the calling UE has registered on the SMI AS, etc.

Step 4. In the case that the ENUM query fails, according to the initial filtering rule, if the SIP-based message is not in the format of the packaged conventional short message and the calling UE has registered on the SMI AS, or if the user preference or the operator's policy requires service level interworking, the S-CSCF sends the SIP-based message to the SMI AS, then step 5 is executed. Otherwise, if the SIP-based message is in the format of the packaged conventional short message, the S-CSCF routes the SIP-based message to the IP message gateway according to the existing technologies. In this case, the IP message gateway de-packages and transmits the SIP-based message. The following procedure is omitted herein.

Step 5. The SMI AS authorizes the interworking service, i.e. checks the subscription information of the user to show whether the user has subscribed the interworking service. If the authorization is successful, the SMI AS checks whether the body of the SIP-based message can be converted into a conventional short message, and if yes, converts the SIP-based message into a conventional short message and forwards the conventional short message converted from the SIP-based message to the conventional short message system. The conventional short message system finishes the following forwarding of the message. If the SMI AS checks that the body of the SIP-based message can not be converted into a conventional short message, the SMI AS returns to the S-CSCF a failure report.

Step 6. When receiving an SMS message delivery report returned from the conventional short message system, the SMI AS converts the message delivery report into a corresponding SIP-based response message.

Steps 7-8. The SMI AS transmits the SIP-based response message to the calling UE via the IMS network.

In an example, the SIP-based message in step may further include a Communication Service identity (CSID). In this case, the checking of the second initial filtering rule in step 3 may further include determining according to the CSID whether the user has subscribed for the message interworking service.

In addition, the steps 3-5 as shown in Figure 6 may be replaced by the following steps:

Step 3'. The S-CSCF checks based on the second initial filtering rule upon receiving the SIP-based message. The checking may include: checking whether the capability feature identity (feature tag) carried in the SIP-based message is "+g.oma.sip-im" of a pure IMS message or "+g.3gpp.smsip" of packaged IMS message, or checking whether the calling user has subscribed for the service level interworking service, or checking whether the information identity of the CSID carried in the SIP-based message is for the service level interworking service, etc.

Step 4'. When the feature tag carried in the SIP message is "+g.3gpp.smsip" of packaged IMS message, the S-CSCF routes the SIP-based message to the IP message gateway. The subsequent procedure is the same as that in the existing technologies. In the other 3 cases, the S-CSCF routes the SIP-based message to the SMI AS in the calling network.

Step 5'. The SMI AS in the calling network judges whether a service level interworking is requried according to the preference of the calling user and the policy of the operator. Here there may be the following 3 possible cases: service level interworking is required, processing as default is required, service level interworking is not required.

If the service level interworking is required, the SMI AS in the calling network authorizes the interworking service. If the authorization is successful, the SMI AS in the calling network converts the SIP-based message into a conventional short message and forwards the conventional short message converted from the SIP-based message to the conventional short message system. The conventional short message system finishes the following forwarding of the message.

If processing as default is required, the SMI AS in the calling network selects the domain network to which the SIP-based message is to be delivered according to the identity of the called user. If the identity of the called user is in the form of TEL URL, the SMI AS in the calling network may select to deliver the message via the IMS domain or CS/PS domain according to the information of self-configured number segment or the result of the ENUM (Telephone Number Mapping working group) query.

If the selected domain is a CS/PS domain the SMI AS in the calling network authorizes the interworking service. If the authorization is successful, the SMI AS in the calling network converts the SIP-based message into a conventional short message and forwards the conventional short message converted from the SIP-based message to the conventional short message system. The conventional short message system finishes the following forwarding of the message. If the authorization is not successful, the SMI AS in the calling network returns to the S-CSCF in the calling network a failure report. If the selected domain is an IMS domain, the SIP-based message is forwarded to the called IMS network according to the existing technologies.

If the service level interworking is not required, the SMI AS in the calling network selects the IMS domain according to the information of self-configured number segment or the result of the ENUM query, and forwards the SIP-based message to the called IMS network according to the existing technologies. If the SMI AS in the calling network can not select an IMS domain, the SMI AS in the calling network returns to the S-CSCF in the calling network a failure report. In other word, if the service level interworking is unnecessary, the SMI AS in the calling network can not select a CS/PS domain, but has to select an IMS domain to deliver the SIP-based message. If the SMI AS in the calling network can not select an IMS domain, the SMI AS in the calling network returns to the S-CSCF in the calling network a failure report.

As can be understood from the step 5' as mentioned above, when receiving a SIP-based message and before converting the SIP-based message into the format of conventional short message, the procedure may further include the following: the SMI AS judges whether the service level interworking is necessary, and if yes, converts the SIP-based message into the format of conventional short message.

The SMI AS may judge whether the service level interworking is necessary according to the preference of the calling user or the policy of the operator. Alternatively, the SMI AS may determine that the service level interworking is necessary when the called IMS domain is unreachable.

In addition, after the SMI AS determines that the service level interworking is necessary and before converting the SIP-based message into the format of conventional short message, the procedure may further include the following: the SMI AS authorizes the interworking service. If the authorization is successful, the SMI AS converts the SIP-based message into the format of conventional short message.

Further, in the above MO procedure, the IP message gateway or the SMI AS may be also be used for generating a charging data record for the interworking service.

After the UE has registered in the IP-Message-GW and the SMI AS, the IMS-MT (IMS domain Message Terminating) procedure in the service level interworking between the conventional short message services and the SIP-based message services may be classified into two modes: i.e. a transparent mode and a non-transparent mode, according to the processing of responses at the network side.

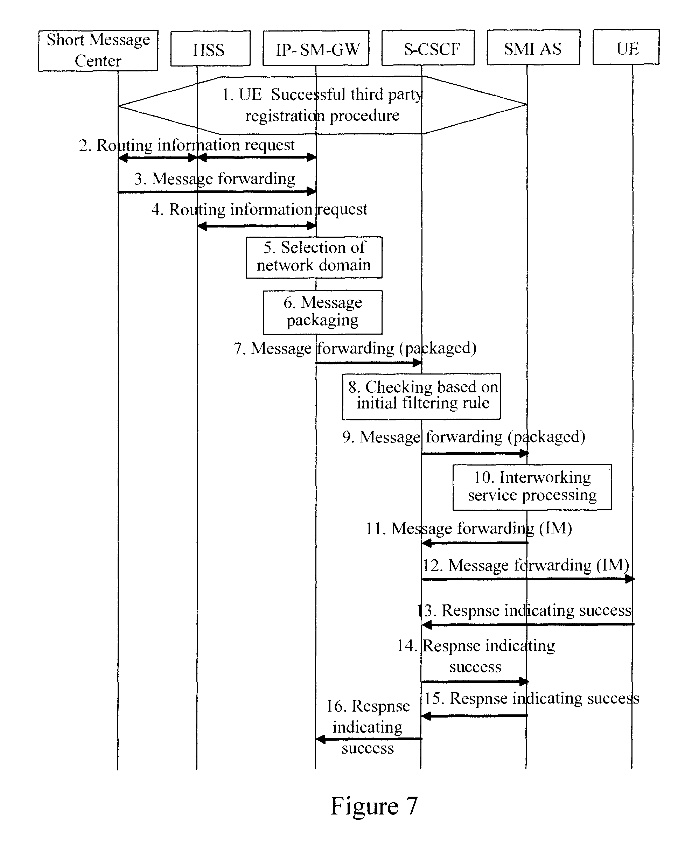

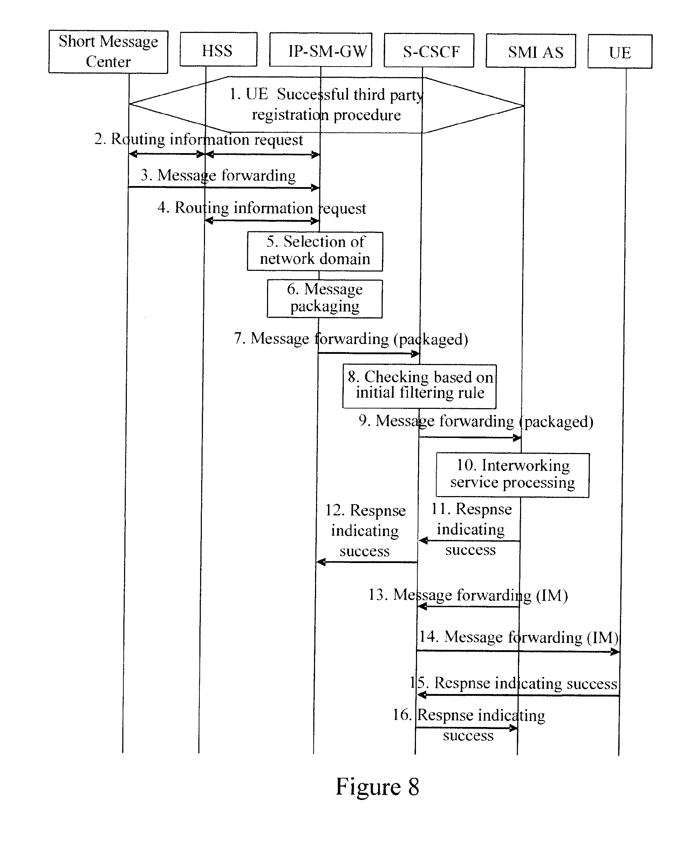

In the transparent mode, the conventional called user returns a 200 OK response to the SMI AS when finally receiving the short message. Figure 7 illustrates an IMS-MT procedure in the transparent mode. In the non-transparent mode, the SMI AS returns a 200 OK response to the calling side after receiving a SIP-based message forwarded from the S-CSCF, authorizing the interworking service and converting the format of the message. In this case, the SMI AS serves as a short message center of the called side, and the subsequent message processing procedure is performed by the SMI AS. Figure 8 illustrates an IMS-MT procedure in the non-transparent mode.

Figure 7 is a schematic diagram illustrating an IMS-MT procedure in a transparent mode for service level interworking between SIP messages and conventional short messages based on the architecture as shown in Figure 4.

Step 1. The UE registers in the S-CSCF according to the IMS registration procedure. The I-CSCF and P-CSCF in the IMS core network are not shown in the figure. In addition, the UE registers in the IP message gateway and the SMI AS according to the third party registration procedure.

Step 2. The conventional short message center sends a routing information query request to the HSS. The HSS forwards the routing information query request to the IP message gateway, and the IP message gateway returns the address of the IP message gateway to the conventional short message center.

Step 3. The conventional short message center sends a conventional short message to the IP message gateway.

Step 4. The IP message gateway sends a routing information query request to the HSS. The HSS returns the address(es) of the MSC and/or SGSN.

Step 5. The IP message gateway selects a network domain according to a preference of the user and a policy of the operator, and based on the address of the S-CSCF saved during the third party registration and the address of the MSC/SGSN obtained from the HSS.

Step 6. If an IMS domain is selected, the IP message gateway packages the conventional short message into a body of a SIP-based message.

Step 7. The IP message gateway forwards the SIP-based message packaged with the conventional short message to the S-CSCF.

Step 8. When receiving the SIP-based message, the S-CSCF checks based on the third initial filtering rule. The checking may include checking whether the called user has successfully registers on the SMI AS and whether the called user equipment currently in use does not support the conventional short message protocol stacks, i.e. the SMS protocol stacks, and if yes, the S-CSCF sends the SIP-based message to the SMI AS. Or the checking may include checking that the user' preference or the operator's policy requires service level interworking, and in this case the S-CSCF sends the SIP-based message to the SMI AS.

In the example mentioned above, the result of the checking is to forward the message to the SMI AS. If the result of the checking does not require the message to be forwarded to the SMI AS, the S-CSCF delivers a packaged IMS immediate message according to the existing technologies.

Step 9. The S-CSCF forwards the SIP-based message to the SMI AS.

Step 10. The SMI AS authorizes the interworking service. Particularly, the SMI AS obtains the identity of the called user from the received SIP-based message and authorizes the interworking service according to the subscription information of the called UE corresponding to the identity so as to authorize the interworking service. If the authorization is successful, the SMI AS de-packages the IMS immediate message to obtain the conventional short message. The SMI AS checks whether the body of the conventional short message can be converted into a SIP-based message, if yes, converts the conventional short message into a SIP-based message. The SMI AS may choose to save a copy of the converted immediate message according to the operator's policy. If the body of the conventional short message can not be converted into a SIP-based message, the SMI AS returns a failure report to the S-CSCF.

Step 11. The SMI AS returns to the S-CSCF the SIP-based message converted from the conventional short message.

Step 12. The S-CSCF forwards the received SIP-based message to the called user.

Step 13. The called user returns a response indicating the successful receipt of the SIP-based message to the S-CSCF.

Step 14. The S-CSCF forwards the response indicating the success receipt of the SIP-based message to the SMI AS.

Step 15. The SMI AS returns to the S-CSCF a response indicating success.

Step 16. The S-CSCF returns to the IP message gateway a response indicating successful receipt of the message.

Figure 8 is a schematic diagram illustrating an IMS-MT procedure in a non-transparent mode for service level interworking between SIP messages and conventional short messages based on the architecture as shown in Figure 4. The steps 1-10 as shown in Figure 8 is the same as the steps 1-10 as shown in Figure 7, and are not repeated herein. The following description starts from the step 11.

Step 11. The SMI AS sends to the S-CSCF a response, e.g. 200 OK, indicating the successful receipt of the message.

Step 12. The S-CSCF forwards to the S-CSCF the response 200 OK indicating the successful receipt of the message.

Step 13. The SMI AS returns the SIP-based message to the S-CSCF.

Step 14. The S-CSCF delivers the SIP-based message to the UE via the IMS domain. I-CSCF and P-CSCF are not shown in the figure.

Step 15. The UE returns to the S-CSCF a response indicating successful receipt of the message.

Step 16. The S-CSCF returns to the SMI AS the response indicating successful receipt of the message.

In addition, In the MT procedure, the IP message gateway or the SMI AS may also be used for generating the charging data record for the interworking service.

In general, the conventional short message center requires the called user to return a message delivery report (e.g. Delivery Report) after the called user successfully receives the SIP-based message. In the embodiment, since the UE is a pure IMS user which does not support the format of the conventional short message domain, the message delivery report is initiated by the SMI AS.

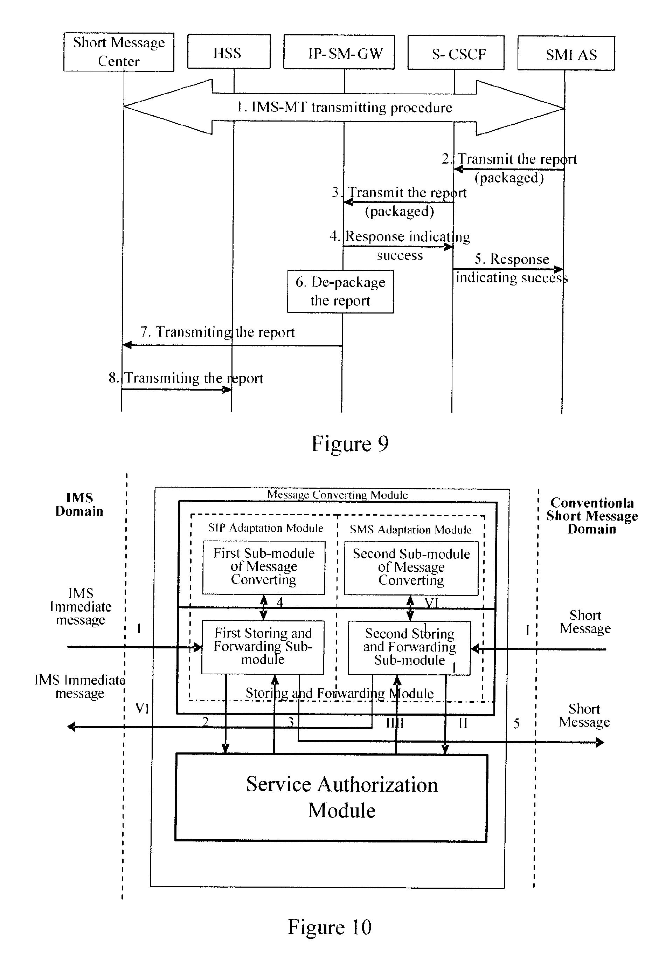

According to the above IMS-MT procedures for service level interworking between SIP-based message services and conventional message services, in the transparent mode, the SMI AS may generate a Delivery Report after receiving the response 200 OK indicating the successful receipt of the message returned by the called user and forwarded by the S-CSCF and packages the Delivery Report in a body of a SIP-based message for transmission. In the non-transparent mode, the SMI AS may also generate a Delivery Report after the interworking service authorization and format conversion for the received SIP-based message and packages the Delivery Report in a body of a SIP-based message for transmission. In the two modes, the times of generating the Delivery Reports are different, but the processing procedures of the network side are the same. Figure 9 shows the processing procedure of the network side.

Figure 9 is a schematic diagram illustrating the returning of a delivery report in the IMS-MT procedures based on the architecture as shown in Figure 4.

Step 1. The transmitting procedure in IMS-MT is the same as those as shown in Figures 7 and 8.

Step 2. The SMI AS constructs a Delivery Report according to the transmission status of the SIP-based message, packages the Delivery Report into the body of a SIP message and sends the packaged Delivery Report to the S-CSCF.

Step 3. The S-CSCF forwards the packaged Delivery Report to the IP message gateway.

Step 4. The IP message gateway returns a response, e.g. 200 OK, indicating success to the S-CSCF.

Step 5. The S-CSCF returns the response200 OK indicating success to the SMI AS.

Step 6. The IP message gateway de-packages the packaged Delivery Report.

Step 7. The IP message gateway sends the de-packaged Delivery Report to the conventional short message center.

Step 8. When receiving the Delivery Report, the conventional short message center sends a status report to the HSS to update the database in the HSS.

In this way, the MT procedure ends.

The embodiment further provides two types of message interworking entities, which are network entities or functional modules for enabling the service level interworking between SIP messages and conventional short messages. The two types are described as follows.

Figure 10 illustrates the structure of a message interworking entity. The message interworking entity as shown in Figure 10 includes: a storing and forwarding module, a message converting module and a service authorization module. The storing and forwarding module may include a first storing and forwarding sub-module and a second storing and forwarding sub-module. The first storing and forwarding sub-module is responsible for the storing and forwarding from a SIP-based message to a conventional short message. The second storing and forwarding sub-module is responsible for the storing and forwarding from a conventional short message to a SIP-based message. The functions of the two storing and forwarding sub-modules may alternatively be integrated into an integrated storing and forwarding module. The message converting module may include a first sub-module for message converting and a second sub-module for message converting. The first sub-module for message converting is responsible for converting a SIP-based message into a conventional short message and the second sub-module for message converting is responsible for converting a conventional short message into a SIP-based message. The functions of the two sub-modules for message converting may be integrated into an integrated message converting module. The storing and forwarding module, the message converting module and the service authorization module may be located in different network entities, or may be located in the same network entity, for example, may be integrated in an SMI AS.

The first storing and forwarding sub-module and the first sub-module for message converting together may be called as a SIP message adaptation module, responsible for the interworking service from a SIP-based message to a conventional short message. The first storing and forwarding sub-module and the first sub-module for message converting may be located in the same network entity, or may be located in different network entities. The second storing and forwarding sub-module and the second sub-module for message converting together may be called as an SMS adaptation module, responsible for the interworking service from a conventional short message to a SIP-based message. The second storing and forwarding sub-module and the second sub-module for message converting may be located in the same network entity, or may be located in different network entities. The service authorization module is adapted to receive a service authorization request sent from the first storing and forwarding sub-module or the second storing and forwarding sub-module, authorize the service according to the subscription information of the user, and return a service authorization response to the first storing and forwarding sub-module or the second storing and forwarding sub-module.

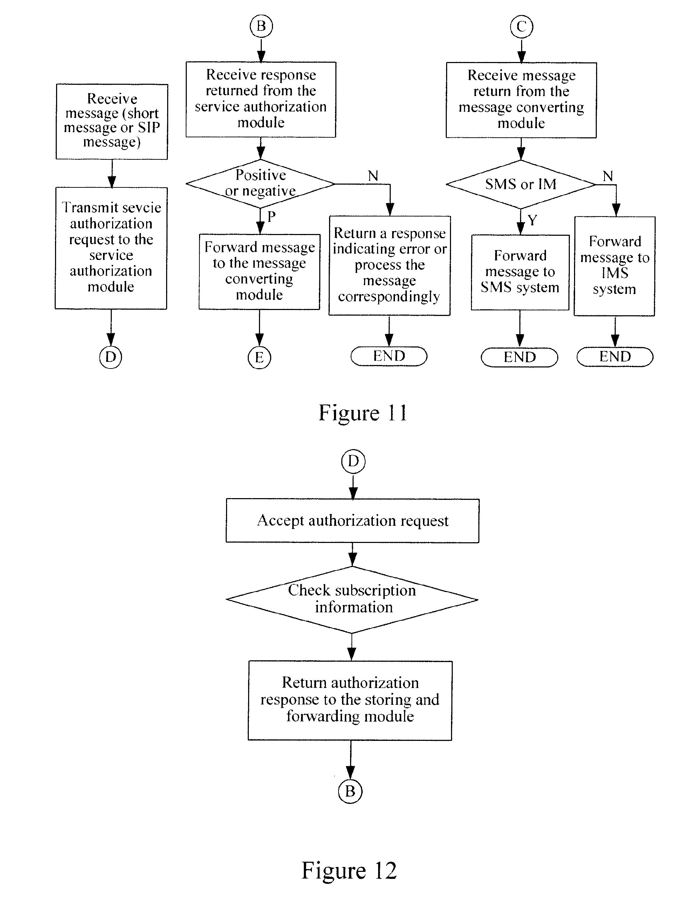

Figures 11, 12 and 13 are schematic diagrams illustrating the processing procedures of the storing and forwarding module, the message converting module, and the service authorization module during the service level conversion between a SIP-based message and a conventional short message, respectively.

The storing and forwarding module, including a first storing and forwarding sub-module and a second storing and forwarding sub-module, is adapted to receive a message (including a conventional short message and a SIP-based message) from a network side, send a service authorization request to the service authorization module. Upon receiving an authorization response from the service authorization module, if the authorization response is a positive response, the storing and forwarding module is adapted to forward the message from the network side to the message converting module, receive a message returned from the message converting module, determine whether the format of the message returned from the message converting module is a SIP-based message or a conventional short message, if the message returned from the message converting module is a SIP-based message, deliver the message returned from the message converting module to a network side of IMS domain, and if the message returned from the message converting module is a conventional short message, deliver the message returned from the message converting module to a network side of conventional short message. If the authorization response is a negative response, the storing and forwarding module is adapted to return a response indicating error to the conventional message routing entity or process the message correspondingly, for example, deliver the message according to the existing technologies.

The service authorization module is adapted to check the subscription information of the user when receiving the service authorization request and return an authorization response to the storing and forwarding module.

The message converting module, including a first-sub-module for message converting and a second sub-module for message converting, is adapted to convert the format of the message (including a conventional short message and a SIP-based message) forwarded from the storing and forwarding module when receiving the message forwarded from the storing and forwarding module, and return a message in the converted format to the storing and forwarding module.

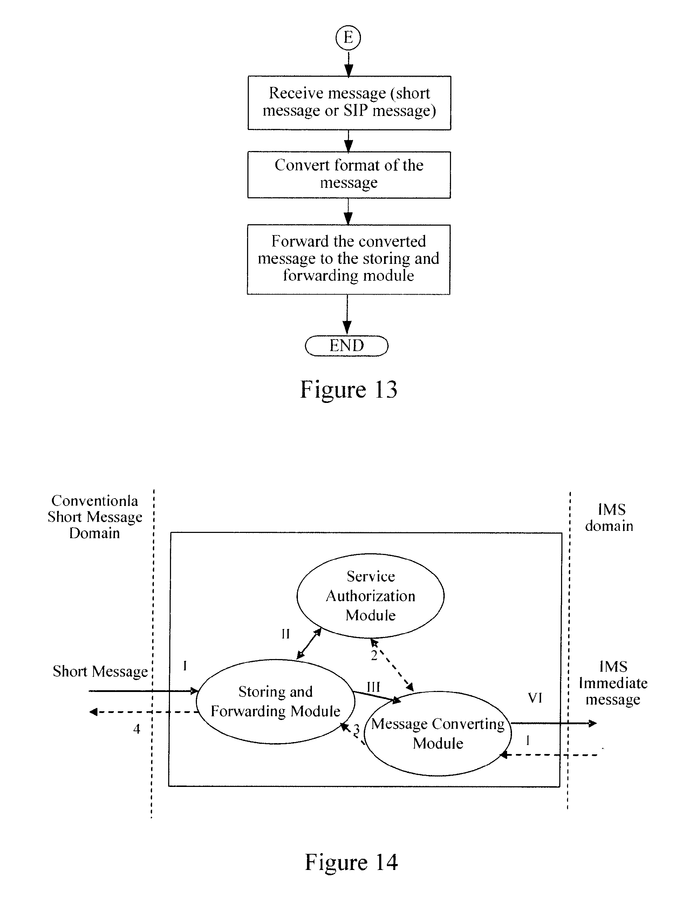

Figure 14 illustrates the structure of another type of message interworking entity. The message interworking entity as shown in Figure 14 includes a storing and forwarding module, a message converting module and a service authorization module. The storing and forwarding module, the message converting module and the service authorization module may be located in different network entities, or may be located in the same network entity. The storing and forwarding module is connected with a conventional message routing entity and the message converting module is connected with an IMS domain.

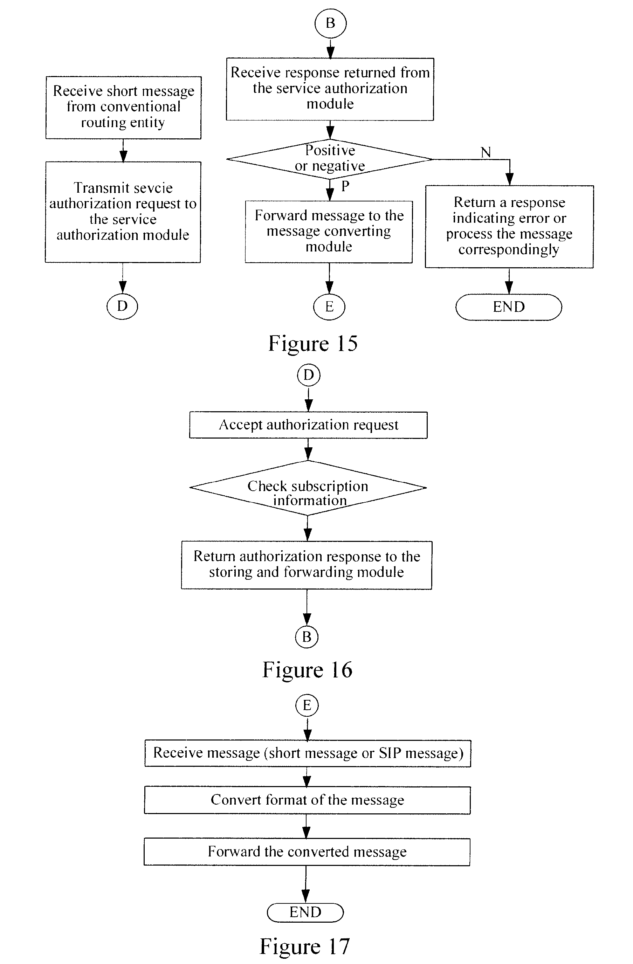

Figures 15, 16 and 17 are schematic diagrams illustrating the processing procedures of the storing and forwarding module, the message converting module, and the service authorization module during the service level conversion from a conventional short message to a SIP-based message, respectively.

The storing and forwarding module is adapted to send a service authorization request to the service authorization module when receiving a conventional short message from a conventional short message domain, receive an authorization response from the service authorization module. If the authorization response is a positive response, the storing and forwarding module is adapted to forward the received conventional short message to the message converting module. If the authorization response is a negative response, the storing and forwarding module is adapted to return a response indicating error to the conventional message routing entity, or process the conventional short message correspondingly, for example, deliver the conventional short message according to the existing technologies.

The service authorization module is adapted to check the subscription information of the user when receiving a service authorization request and return an authorization response to the storing and forwarding module.

The message converting module is adapted to convert the conventional short message forwarded from the storing and forwarding module into a SIP-based message when receiving the conventional short message forwarded from the storing and forwarding module, and forward the SIP-based message converted from the conventional short message forwarded from the storing and forwarding module to the IMS domain.

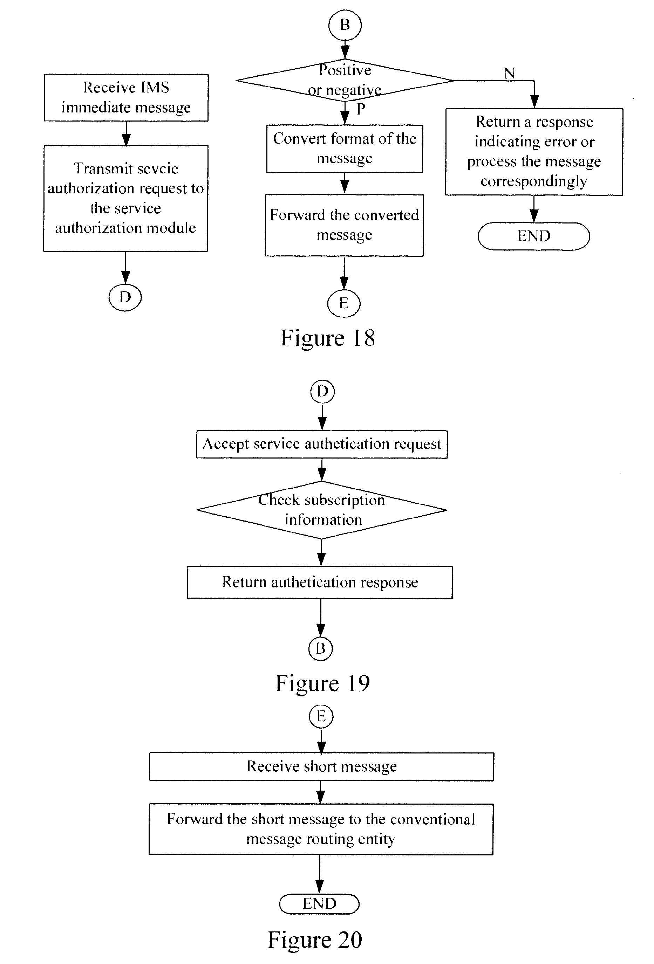

Figures 18, 19 and 20 are schematic diagrams illustrating the processing procedures of the storing and forwarding module, the message converting module, and the service authorization module during the service level conversion from a SIP-based message to a conventional short message, respectively.

The message converting module is adapted to send a service authorization request to the service authorization module when receiving a SIP-based message from the IMS domain, receive an authorization response from the service authorization module. If the authorization response is a positive response, the message converting module is adapted convert the SIP-based message from the IMS domain into a conventional short message. If the authorization response is a negative response, the message converting module is adapted to return a response indicating error to the IMS domain, or process the SIP-based message correspondingly.

The service authorization module is adapted to check the subscription information of the user when receiving a service authorization request and return an authorization response.

The storing and forwarding module is adapted to forward a conventional short message to the short message routing entity in the conventional short message domain when receiving the conventional short message. In addition, before forwarding the conventional short message, the storing and forwarding module may store the conventional short message to make a backup according to a policy of the operator.

**Second Embodiment:**

The IP-Message-GW, i.e. IP message gateway, integrates the functions of a message service router and an SMI AS. The IP-Message-GW implements the functions including domain selection, authentication of service level interworking services and conversion of message formats and the like. In this way, the service level interworking between SIP-based messages and conventional short messages may be achieved by enhancing the functions of the IP message gateway, without the need of adding any new entity into the network.

In the solution, the IP message gateway may know whether a user needs the service level interworking according to the subscription information of the user downloaded from an HSS during a third party registration. In an IMS message termination procedure, when receiving a conventional short message forwarded by the conventional routing entity, the IP message gateway inquiries the HSS for routing information. The HSS returns only the address(es) of MSC and/or SGSN. The IP message gateway may select a domain based on the address information of IMS domain obtained during the third party registration and the received address(es) of MSC and/or SGSN, according to a policy of the operator and a preference of a user. If the selected domain is an IMS domain and it is known that the user has subscribed for the service level interworking from the subscription information of the user but the current user equipment of the user does not support the SMS protocol stacks, or the preference of the user or the policy of the operator requires service level interworking, the IP message gateway may convert the conventional short message into the format of SIP-based message, store and deliver the SIP-based message converted from the conventional short message. If the user has not subscribed for the service level interworking from the subscription information of the user and the current user equipment of the user supports the SMS protocol stacks, the IP message gateway may package the conventional short message into a SIP-based message, and deliver the SIP-based message packaged with the conventional short message, for example, according to the existing technologies.

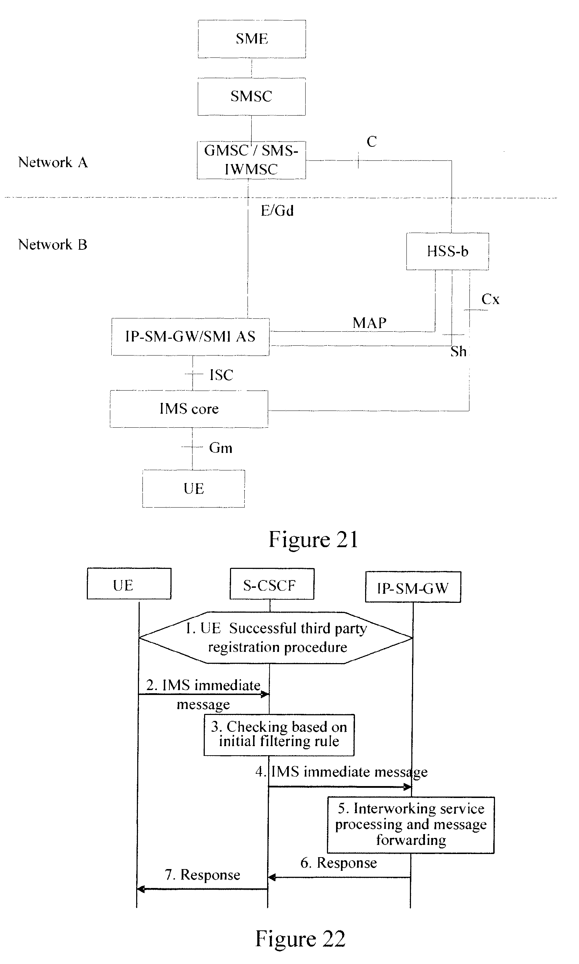

Figure 21 illustrates the architecture according to the second embodiment of the invention.

The architecture as shown in Figure 21 may include a conventional short message system, an IMS core network, user equipments and an IP message gateway capable of conversion of message formats. That is, the IP message gateway integrates the functions of a message service router and an SMI AS. The IP message gateway is connected with the IMS core network via an ISC interface. The employed protocol is SIP protocol. The IP message gateway is connected with an HSS of the calling side via a MAP interface and an Sh interface. The MAP interface is adapted to implement the functions of the message service router and the Sh interface uses the DIAMETER protocol, and is adapted to notify the HSS that the user is capable of IMS access in the case that there are multiple access manners. The IP message gateway is connected with the conventional short message center via an E-GD interface.

According to the architecture as shown in Figure 21, if a user wishes to use the service level interworking service, the user is required to register onto the IP message gateway first via a third party registration procedure. The third party registration procedure is similar to that as shown in Figure 2, the difference lies in that in third party registration procedure as shown in Figure 21 the registration request initiated by the user contains a feature tag indicating whether the user has the capability of supporting SMS/EMS.

Figure 22 illustrates an IMS-MO (Message Originating in IMS domain) procedure for service level interworking between SIP-based messages and conventional short messages. As shown in Figure 22, the IMS-MO procedure may be as follows:

Step 1. A UE registers onto an S-CSCF according to IMS registration procedure. Here the other network entities such as I-CSCF and P-CSCF in the IMS core network are not shown in the figure for the sake of simplicity. In addition, the UE has registered onto an IP message gateway according to the third party registration procedure.

Step 2. The UE sends a SIP-based message to the S-CSCF via the IMS domain. The SIP-based message may carry a Communication Service Identity (CSID) for identifying whether a calling UE has subscribed a message interworking service.

Step 3. The S-CSCF checks based on a fourth initial filtering rule upon receiving the SIP-based message, to determine whether to send the SIP-based message to the IP message gateway. The checking may include: checking whether the user has subscribed for the message interworking service according to a CSID carried in the SIP-based message if the SIP-based message carries the CSID; checking whether the identity of a called user is TEL-URI or the like if the SIP-based message does not carry the CSID. The main object of the checking based on the fourth initial filtering rule is to determine whether to route a received message to the IP message gateway.

If it is checked that the user has subscribed for the message interworking service or the identity of the called user is TEL-URL, the step 4 is executed; otherwise, the procedure is performed according to the existing technology.

Step 4. The S-CSCF forwards the SIP-based message to the IP message gateway.

Step 5. The IP message gateway performs a conversion checking. The conversion checking may include the following:

The identity of the called user is checked. If the identity of the called user is in the form of TEL-URL (in the case that the calling user is an IMS user and the called user is a PS/CS user), the IP message gateway performs an ENUM query for the called user.

If the ENUM query is successful, i.e. if the TEL-URI can be successfully converted into a SIP-URI, the IP message gateway transmits the SIP-based message to the IMS domain of the called user. The transmitting procedure is the same as that in the existing technologies. If the ENUM query fails, the IP message gateway checks the SIP-based message.

If the SIP-based message is in a packaged format, the IP message gateway de-packages the SIP-based message to obtain a conventional short message packaged therein. If the SIP-based message is not in a packaged format or a preference of a user or a policy of an operator requires service level interworking, the IP message gateway authorizes the interworking service, i.e. checks whether the calling UE has subscribed for the service level interworking service.

If the authorization checking is not successful, it may be determined that the conversion checking does not pass, the IP message gateway returns a response indicating failure to the calling side.

If the authorization checking is successful, the IP message gateway continues to check whether the format of the body of SIP-based message can be converted.

If the format of the body of SIP-based message can not be converted, it may be determined that the conversion checking does not pass, the IP message gateway returns a response indicating failure to the calling side.

If the format of the body of SIP-based message can be converted, it may be determined that the conversion checking passes. The IP message gateway continues to check whether an address (e.g. an address of a short message center SM-SC) of a conventional short message of the called user can be obtained. If not, it may be determined that the conversion checking does not pass, the IP message gateway returns a response indicating failure to the calling side.

If the address of the conventional short message of the called user can be obtained, the IP message gateway converts the SIP-based message into a conventional short message. The conversion includes the conversion of the body of the SIP-based message and the conversion of identities of the users. For example, the conversion of identities of the users may include the converting the identities of the calling and called users into a format identifiable by the conventional short message system, e.g. converting a SIP-URI into a TEL-URI. In addition, the IP message gateway may also disassemble and assemble the SIP-based message according to a policy of the operator, for example, the SIP-based message may be disassembled into multiple short messages having sequential numbers for transmission, or may be assembled to be an EMS message for transmission, or the like. The IP message gateway forwards the message converted from the SIP-based message.

The procedure for obtaining the address of the conventional short message system of the called user may be as follows: if the IP message gateway integrates the functions of a conventional short message center, the IP message gateway directly inquires the HSS about routing information to obtain the address of MSC/SNSN and selects an appropriate route according to a policy of the operator and a preference of the user so as to forward the short message converted from the SIP-based message; if the IP message gateway does not integrate the functions of a conventional short message center, the IP message gateway transmits the short message converted from the SIP-based message to the conventional short message center, the conventional short message center inquires the HSS about routing information to obtain the address of MSC/SNSN and selects an appropriate route according to a policy of the operator and a preference of the user so as to forward the short message converted from the SIP-based message.

If the authorization fails, the IP message gateway transmits a failure report to the calling UE, the procedure of which is the same as the existing processing procedure.

Steps 6-7. The IP message gateway transmits a response message, which is a response to the short message converted from the SIP-based message, to the UE via the IMS network. The response message may be returned after the IP message gateway processes the inerworking service, or may be returned after the IP message gateway has received the Delivery report returned by the called user.

Alternatively, the steps 3-5 as shown in Figure 22 may be implemented as follows:

Step 3'. The S-CSCF checks based on the fourth initial filtering rule upon receiving the SIP-based message. The checking may include: checking whether the feature tag carried in the SIP-based message is "+g.oma.sip-im" or "+g.3gpp.smsip", or checking whether the calling user has subscribed for the service level interworking service, or checking whether the information identity of CSID carried the SIP-based messageis for the service level interworking service.

If the feature tag is "+g.3gpp.smsip", the procedure is performed according to the existing technology. In the other three cases described above, the step 4' is executed.

Step 4'. The S-CSCF forwards the SIP-based message to the IP message gateway.

Step 5'. The IP message gateway performs a conversion checking. If the conversion checking passes, the IP message gateway converts the received SIP-based message into a conversional short message, converts the identity of the calling user into a format identifiable by the conventional short message system, and transmits the conventional short message converted from the SIP-based message to the conventional short message system.

The conversion checking may include the following:

The IP message gateway judges whether the service level interworking is needed according to the preference of the calling user and the policy of the operator. The result of the judging may include that: the service level interworking is needed; the message is to be processed as default; and the service level interworking is not needed.

If the service level interworking is needed, the IP message gateway of the calling network authorizes the interworking service. If the authorization is successful, it may be determined that the conversion checking passes, and in this case, the IP message gateway of the calling network converts the SIP-based message into a short message and forwards the short message converted from the SIP-based message to the conventional short message system for the subsequent forwarding.

If the SIP-based message is to be processed as default, the IP message gateway checks the identity of the called user. If the identity of the called user is in the form of TEL-URL (in the case that the calling user is an IMS user and the called user is a PS/CS user), the IP message gateway selects, according to self-configured number segment information or the result of ENUM query, an IMS domain or a CS/PS domain for forwarding the message.

If the selected called domain is an IMS domain, the IP message gateway transmits the SIP-based message to the network entity S-CSCD in the IMS domain core network of the called user. The transmitting procedure is the same as the procedure for transmitting an IMS immediate message in the existing technology. If the selected called domain is a PS/CS domain, the IP message gateway checks the SIP-based message. If the SIP-based message is in a packaged format, the IP message gateway de-packages the SIP-based message to obtain a conventional short message. If the SIP-based message is not in a packaged format, the IP message gateway authorizes the interworking service, i.e. checks whether the calling UE has subscribed for the service level interworking service. If the authorization is successful, the IP message gateway converts the SIP-based message into a short message. The conversion may include the conversion of the body of the SIP-based message and the conversion of the identities of the users. The conversion of the identities of the users may include the conversion of the identities of the calling and called users (e.g. converting SIP-URI into TEL-URI). The IP message gateway may also disassemble and assemble the SIP-based message according to a policy of the operator (For example, the SIP-based message may be disassembled into multiple short messages having sequential numbers for transmission, or may be assembled to be an EMS message for transmission, or the like). If the authorization fails, the IP message gateway returns a failure report to the IP message gateway. The IP message gateway forwards the conventional short message converted from the SIP-based message. In other words, the IP message gateway selects, according to the identity of the called user, the called domain network for delivering the SIP-based message. When the selected called domain is a CS/PS domain, if the IP message gateway authorizes the interworking service successfully, it may be determined that the conversion checking passes.

If the service level interworking is not needed, the IP message gateway selects, according to the self-configured number segment information or the result of ENUM query, an IMS domain for forwarding the SIP-based message. The SIP-based message is forwarded to the called IMS domain according to the existing technology. If the SMI AS can not select the IMS domain, the SMI AS returns a failure report to the S-CSCF in the calling network. In other words, if the service level interworking is not needed, the SMI AS can select only an IMS domain rather than a CS/PS domain. If the selection of the IMS domain is not successful, it may be determined that the conversion checking does not pass, and a failure report is returned.

It can be understood that the conversion checking of the IP message gateway in the above described step 5' includes: judging by the IP message gateway whether the service level interworking is needed. The IP message gateway judges whether the service level interworking is needed according to the preference of the calling user or a policy of the operator. Alternatively, the IP message gateway may determine that the service level interworking is needed if the called IMS domain is unreachable.

Before the IP message gateway converts the received SIP-based message into the conventional short message, the IP message gateway may further authorize the interworking service. If the authorization is successful, the IP message gateway converts the received SIP-based message into the conventional short message.

In addition, the IP message gateway may further generate a charging data record for the interworking service.

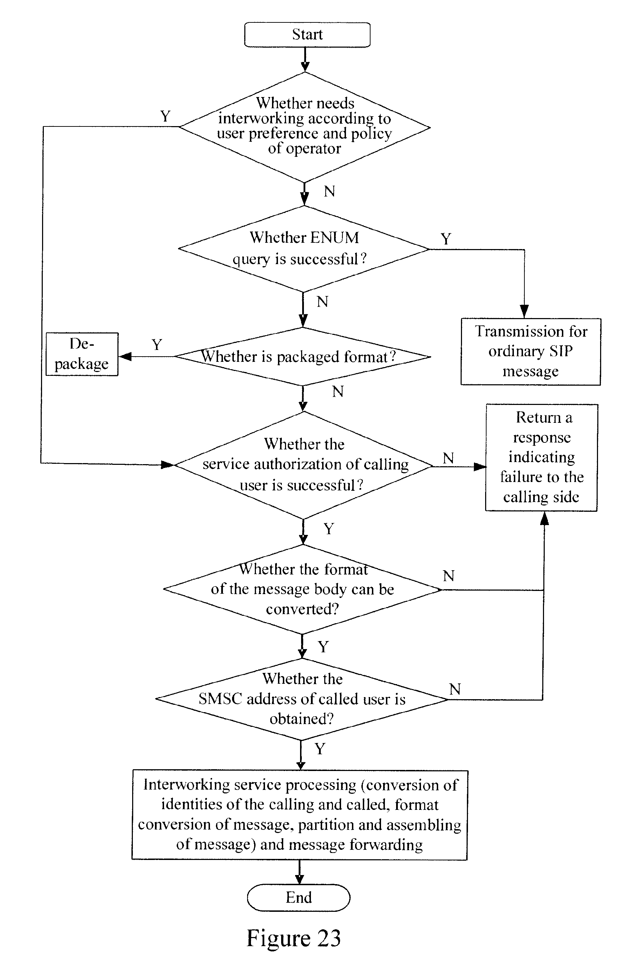

Referring to Figure 23, the IP message gateway integrating the functions of an SMI AS may have the following functions according to the IMS MO procedure as shown in Figure 21:
① Downloading the subscription data of user via the Sh interface during the third party registration;
② Obtaining the address of the short message center (SM-SC) of the called user (the address of the SM-SC may be configured in an IP message gateway, or the IP message gateway serves as the SM-SC of the called user);
③ Authorizing user services;
④ Converting the identity of the calling user (converting SIP-URI format into TEL-URI format);
⑤ Converting messages (Packaging or format converting);
⑥ Disassembling and assembling of messages (optional as required);
⑦ Charging of the interworking service (generating a Charging Data Record (CDR));
⑧ Judging whether the service level interworking service is needed according to a preference of a user and a policy of an operator; and
⑨ Selecting called domain for message transmission.

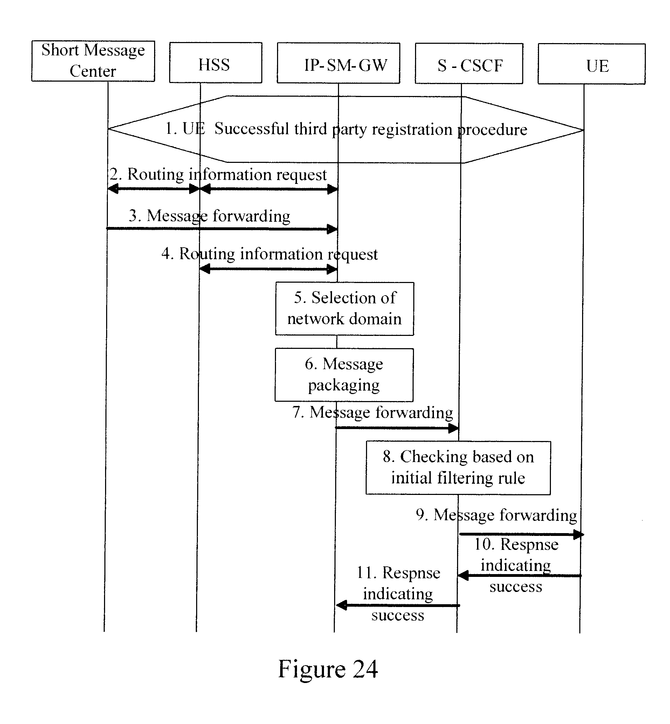

Figure 24 is a schematic diagram illustrating an IMS-MT procedure for interworking of the service level between SIP messages and conventional short messages based on the architecture as shown in Figure 21.

Step 1. A UE registers onto an S-CSCF according to IMS registration procedure. Here the other network entities such as I-CSCF and P-CSCF in the IMS core network are not shown in the figure. In addition, the UE has registered onto an IP message gateway according to the third party registration procedure.

Step 2. The conventional short message center sends a routing information query request for querying routing information to the HSS. The HSS forwards the routing information query request to the IP message gateway, and the IP message gateway returns the address of the IP message gateway to the conventional short message center.

Step 3. The conventional short message center sends a conventional short message to the IP message gateway.

Step 4. The IP message gateway sends a routing information query request for querying routing information to the HSS. The HSS sends a routing information query request for querying routing information to the HSS. The HSS returns the address(es) of MSC and/or SGSN. Here the IP message gateway functions as a short message center of the called side, e.g. an SM-Router (See TS23.840), and may process the received message. For example, the IP message gateway may filter off spam and check viruses, etc.

Step 5. The IP message gateway selects a domain based on the address of the S-CSCF stored during the third party registration and the address(es) of MSC and/or SGSN obtained from the HSS, according to a policy of the operator or a preference of the user.

Step 6. If the selected domain is an IMS domain, the IP message gateway checks the subscription information of the user obtained during the third party registration, i.e. checks whether the user supports the service level interworking and whether the user supports SMS protocol stacks. The obtained subscription information of the user may be used for the authorization checking.

If the user supports the service level interworking but the current user equipment of the user does not support SMS protocol stacks, or the preference of the user or the policy of the operator requires the service level interworking, the IP message gateway checks whether the body of the conventional short message can be converted. If the body of the conventional short message can be converted, the IP message gateway converts the conventional short message into a SIP-based message, converts the identities of the calling and called user, i.e. into a format identifiable by the IMS network. The IP message gateway may also select to store the SIP-based message converted from the conventional short message according to the preference of the operator.

If the user does not support the service level interworking and the current user equipment of the user supports SMS protocol stacks, or the body of the conventional short message can not be converted, the IP message gateway packages the conventional short message into the body of a SIP-based message, i.e. packages the conventional short message according to the existing transport level packaging technology. Then the SIP-based message package with the conventional short message is processed according to the existing technologies.

The IP message gateway may also disassemble and assemble the message according to a policy of the operator. For example, the IP message gateway may disassemble a long message (e.g. EMS) into multiple short messages, and assemble the multiple short messages into a SIP-based message for delivery. Or the IP message gateway may assemble a plurality of relevant short messages into a SIP-based message for forwarding.

After the processing of the message interworking service, IP message gateway may store the processing manner of the interworking service in packaged form. The stored processing manner may be "packaged" or may be "format converted".

Step 7. The IP message gateway forwards the SIP-based message to the S-CSCF. The SIP-based message may be converted from the conventional short message, or may be packaged with the conventional short message.

Step 8. The S-CSCF checks the SIP-based message based on an initial filtering rule, i.e. checks based on the first initial filtering rule described above.

Step 9. The S-CSCF forwards the SIP-based message to the UE via the IMS domain.

Step 10. The UE returns a response indicating successful receipt of message to the S-CSCF.

Step 11. The S-CSCF forwards the response indicating successful receipt of message to the IP message gateway.

In addition, the IP message gateway may also generate a charging data record for the interworking service.

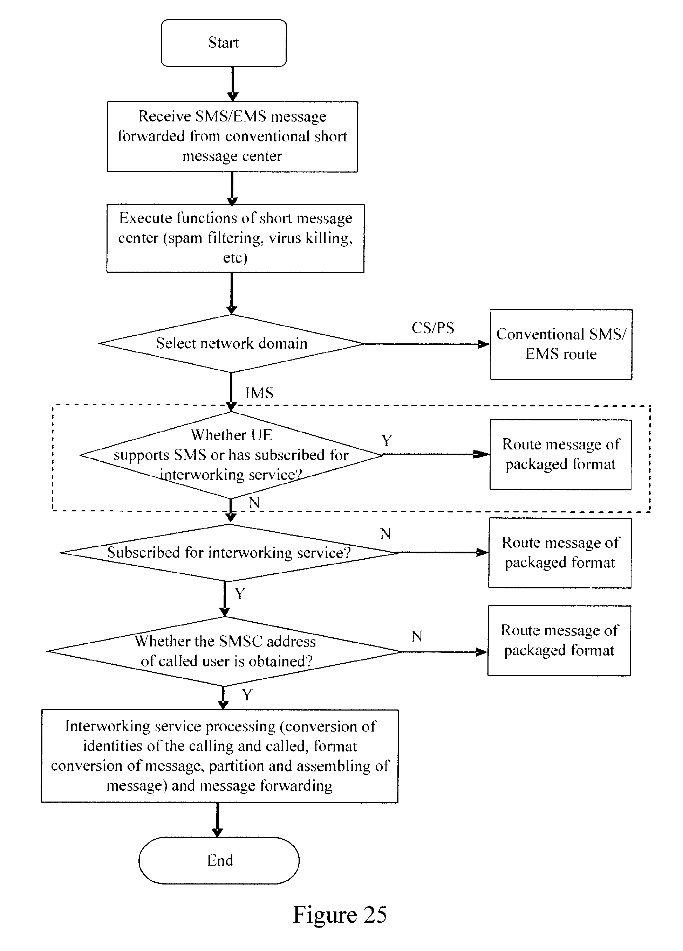

Referring to Figure 25, the IP message gateway integrating the functions of an SMI AS may have the following functions according to the IMS MT procedure described above:
① Storing a feature tag carried by the UE, for the capability of the UE during the third party registration
② Downloading the subscription data of user, to be used in service authorization for the user, via the Sh interface during the third party registration;
③ Converting the identities of the calling and called users, i.e. converting the identities of the calling and called users in TEL-URI format into the SIP-URI format (e.g. by ENUM query);
④ Converting formats of messages;
⑤ Assembling of formats of messages;
⑥ Executing functions of a conventional short message center, i.e. filtering off spam and killing viruses, etc.; and
⑦ Charging for the interworking service (generating a CDR).

In Figure 25, the checking of the capability of the UE, i.e. the checking whether the UE supports SMS, may be optional.

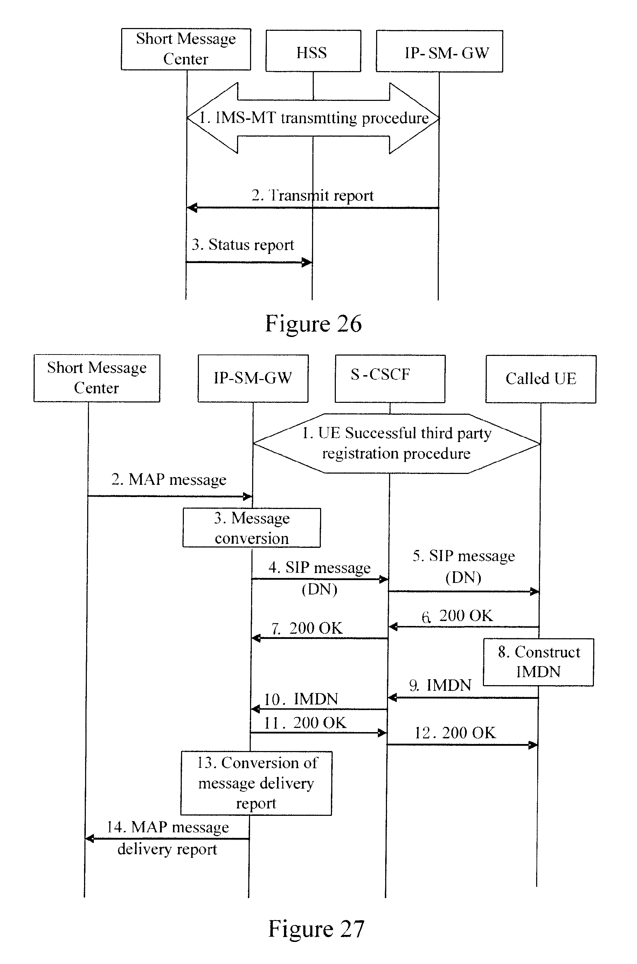

In the IMS MT procedure as shown in Figure 24, in the case that the processing manner of the interworking service by the IP message gateway is "packaged", i.e. if the UE supports the SMS protocol stacks, the IP message gateway waits for the Delivery report packaged in the body of a SIP-based message transmitted by the UE, de-packages the Delivery report and forwards the de-packaged Delivery report to the conventional short message center. The processing procedure is the same as that in the existing technology. In the case that the processing manner of the interworking service by the IP message gateway is "format converted", i.e. the UE utilizes the service level interworking service, the IP message gateway constructs a Delivery report when receiving the response indicating successful receipt of message returned from the S-CSCF and sends the Delivery report to the conventional short message center. The procedure for sending the Delivery report is as follows as shown in Figure 26:

Step 1. The step is the same as the transmitting procedure of IMS-MT as shown in Figure 24.

Step 2. The IP message gateway constructs a Delivery report according to the response indicating successful receipt of message returned from the S-CSCF and sends the Delivery report to the conventional short message center.

Step 3. The conventional short message center sends a status report to the HSS, so as to update the database of the HSS.

Based on the architectures and procedures for interworking between SIP-based messages and conventional short messages as shown in Figures 21-26, the embodiment provides two types of message interworking entity. One of the two types is the same with that as shown in Figures 10-20 according to the first embodiment, and is not repeated herein.

Figure 27 illustrate the procedure for processing a message delivery report in the IMS-MT procedure based on the architecture as shown in Figure 21. In the example, the IP message gateway integrates the functions of an IP message gateway. The conventional short message converted from the SIP-based message is in the MAP format. The message delivery report based on SIP is embodied by an Immediate Message Disposition Notification (IMDN).

Step 1. A UE registers onto the S-CSCF according to the IMS registration procedure. Here the other network entities such as I-CSCF and P-CSCF in the IMS core network are not shown in the figure for the sake of simplicity. In addition, the UE has registered onto an IP message gateway according to the third party registration procedure.

Step 2. When receiving a message (e.g. a message carried in MAP signaling, i.e. the MAP message) in the format of conventional short message from the calling UE via a conventional routing entity, the conventional short message center stores the MAP message, and forwards the MAP message to the IP message gateway according to the address of the IP message gateway obtained form the HSS of the called user.

Step 3. When receiving the MAP message from the conventional short message center, the IP message gateway judges whether to convert the format of the MAP message, if yes, converts the MAP message into a SIP-based message, otherwise, processes the MAP message according to the existing technologies.

The procedure for judging whether to convert the format of the MAP message may include the following:

The IP message gateway performs the functions of message routing, obtains routing information from the HSS, and selects a network domain according to the preference of the user and a policy of the operator. If the selected domain is an IMS domain, the IP message gateway authorizes the called user. If the authorization is successful, the IP message gateway determines to convert the format of the MAP message. If the authorization fails, the IP message gateway returns a failure report.

The process of converting the MAP message into a SIP-based message may include the following:

The IP message gateway converts the MAP message into a SIP-based message, constructs a Disposition Notification (DN) and Message ID as well as time identity (TimeDate) and carries the DN and Message ID and TimeDate in the body of the SIP-based message converted from the MAP message, and stores a mapping relationship between the MAP message and the SIP-based message and the address of the corresponding conventional short message. Alternatively, the IP message gateway may store the whole SIP message converted from the MAP message according to a policy of the operator.

In other words, in the step 3, the IP message gateway implements the conversion between the message (MAP-MO-FORWARD-SHORT-MESSAGE) carried in MAP signaling based on the IMDN technology and the message carried in SIP signaling and the storage of information for subsequent processing of message delivery report. The above contents may be shown as in the following Table 1:

**Table 1**

| **MAP-MO-FORWARD-SHORT-MESSAGE** | **SIP Message (Immediate Message)** |
|---|---|
| **1. Identity of the called user** | |
| **SM-RP-DA:** | **Request-URI** |
| IMSI | SIP-URI |
| Conversion manner: the IP message gateway converts the identity IMSI of called user of MAP signaling into a mobile phone number MSISDN, converts the MSISDN into the TEL-URI format, and converts the TEL-URI format into SIP-URL format by ENUM query. | |

| **2. Identity of the calling user** | |
|---|---|
| **SM-RP-OA:** | **P-Asserted-Identity** |
| MSISDN | Tel-URI/SIP-URI |
| Conversion manner: the IP message gateway converts the identity MSISDN of calling user of MAP signaling into the TEL-URI format, and may convert the TEL-URI format into SIP-URL format by ENUM query. | |

| **3. Message ID** | |
|---|---|
| **Invoked id** | **Message ID** |
| Conversion manner: the IP message gateway constructs, based on the Invoked id carried in the body of MAP message, the Message ID of a SIP-based message relevant with the MAP message, establishes and stores a mapping relationship between the MAP message and the SIP-based message for subsequent processing of message delivery report. | |

| **4. Message Body** | |
|---|---|
| **SM-RP-UI** | **Content** |
| Conversion manner: the IP message gateway converts the message body carried in MAP signaling into the message body carried SIP signaling. | |

| **5. Indicator for requesting message delivery** | |
|---|---|
| **report** | **Disposition Notification** |
| Processing manner: the IP message gateway judges that the received message is in a format of conventional short message, and constructs DN according to a policy of the operator. The IP message gateway may request, according to the policy of the operator, different message delivery reports in different cases, such as "positive-delivery" in the case of successful delivery, "negative-delivery" in the case of failed delivery, or a processing report "processing" or the like. | |

| **6. Message routing information** | |
|---|---|
| | **IMDN-Record-Route** |
| Processing manner: the IP message gateway carries a message header IMDN-Record-Route in the SIP-based message for routing of the following message report, so that the following message report can be returned in an direction adverse to that of the path transmitting the SIP-based message. | |

| **7. Time Identity** | |
|---|---|
| | **DateTime** |
| Processing manner: the IP message gateway generates and carries a time identity (DateTime) in the body of the SIP-based message and stores the time identity information and Message ID in a one-to-one manner for the processing of the following SIP message delivery report. | |

Step 4. The IP message gateway sends the SIP-based message containing the DN to the S-CSCF.

Step 5. The S-CSCF forwards the SIP-based message to the called UE via the IMS domain.

Step 6. The called UE returns a response, e.g. 200 OK, indicating the successful receipt of the SIP-based message to the S-CSCF.

Step 7. The S-CSCF forwards the response 200 OK indicating the successful receipt of the SIP-based message to the IP message gateway.

Step 8. The called UE constructs an IMDN according to the DN, Message ID and TimeDate carried in the SIP-based message and the IMDN-Record-Route information obtained during the transmission of the SIP-based message (the IMDN-Record-Route is copied in the message header IMDN-Route), so that the IMDN may be returned to the IP message gateway in a direction adverse to that of the path transmitting the SIP-based message.

Step 9. The called UE sends the IMDN to the S-CSCF via the IMS domain.

Step 10. The S-CSCF forwards the IMDN to the IP message gateway.

Step 11. The IP message gateway transmits a response, e.g. 200 OK, indicating the successful receipt of IMDN to the S-CSCF.

Step 12. The S-CSCF forwards the response 200 OK indicating the successful receipt of IMDN to the called UE.

Step 13. When receiving the SIP-based message delivery report, i.e. the IMDN, the IP message gateway judges whether to send a message delivery report to the short message center, if yes, converts the format of the SIP-based message delivery report, otherwise, does not convert the format of the SIP-based message delivery report.

The procedure for judging whether to send a message delivery report to the short message center may include the following:

An entity for message interworking judges whether the status information in the received SIP-based message delivery report indicates success or failure. If yes, the entity for message interworking determines to return a message delivery report to the short message center, otherwise, the entity for message interworking determines not to return a message delivery report to the short message center.

After determining to return a message delivery report to the short message center, the IP message gateway performs the following:

The IP message gateway finds the MAP message corresponding to the SIP-based message according to the Message ID carried in the IMDN, and generates a message delivery report of the MAP message according to the status information carried in the IMDN.

In the step 13, the IP message gateway implements the conversion between the SIP-based message delivery report, i.e. IMDN, and the message delivery report (MAP-Delivery-Report) of the MAP message. The above contents may be shown as in the following Table 2:

**Table 2**

| **SIP-based message delivery report IMDN** | **MAP-Delivery-Report** |
|---|---|
| **1. Identify of the calling UE** | |
| **P-Asserted-Identity:** | **MSISDN** |
| **TEL URI** | **IMSI** |
| Conversion manner: the IP message gateway converts the identity of calling user in the TEL-URI format carried in the SIP-based message delivery report into a mobile pone number MSISDN, and converts the MSISDN into a corresponding IMSI by ENUM query. | |

| **2. Message Type Indicator** | |
|---|---|
| | **Message-Type-Indicator** |
| Processing manner: the IP message gateway constructs the message type indicator of the MAP message. The code of the Message-Type-Indicator in the MAP-Delivery-Report is "00". | |

| **3. Parameter Indicator** | |
|---|---|
| | **Parameter-Indicator** |
| Processing manner: the IP message gateway constructs optional parameter indicators according to the optional parameters, such as user data, carried in the MAP-Delivery-Report. | |

| **4. Message response report** | |
|---|---|
| **Failure Cause** | **IMDN** |
| Processing manner: the message body carried by the message delivery report of SIP signaling is converted into the message body carried by the message delivery report of MAP signaling. | |
| Particularly, the IP message gateway constructs a MAP-Delivery-Report excluding Failure Cause if the status parameter information of the IMDN is for example "delivery"; and constructs a MAP-Delivery-Report with a Failure Cause such as "Absent Subscriber" if the status parameter information of the IMDN is for example "failed". | |

Step 14. The IP message gateway sends the MAP-Delivery-Report to the conventional short message center.

In this way, the conventional short message center can receive a message delivery report in the case that the called user does not support SMS/EMS protocol stacks, i.e. the called UE does not support short messages.

In addition, the above embodiment provides the conversion manner between messages borne over SIP signaling and messages borne over MAP signaling based on IMDN technology and the conversion manner between message delivery reports, i.e. IMDNs, borne over SIP signaling and message delivery reports borne over MAP signaling.

The processing in the above embodiment is based on the IP message gateway which has the functions of IP message gateway. In the case that the IP message is a network entity independent from the IP message gateway, the processing is the same except for the routing of messages.

The embodiment of the invention also provides a system for processing message delivery reports during interworking between SIP-based messages and conventional short messages. The system for processing message delivery reports may include a UE in an IMS domain, a UE supporting conventional short messages, an entity for message interworking and a short message center.

When the UE in the IMS domain is calling:

The entity for message interworking is adapted to receive a SIP-based message containing a request message delivery indicator, e.g. DN, from the calling UE in the IMS domain, convert the received SIP-based message into a conventional short message, and transmit a conventional short message, converted from the SIP-based message and containing information indicating that the calling UE requests to receive a message delivery report, to the short message center; receive a message delivery report based on the format of conventional short message, converts the message delivery report based on the format of conventional short message into a SIP-based message delivery report, and sends the SIP-based message delivery report to the calling UE.

The short message center is adapted to store the received conventional short message, forward the conventional short message to the called UE, receive the message delivery report based on the format of conventional short message, queries the information indicating that the calling UE requests to receive a message delivery report in the conventional short message corresponding to the received message delivery report based on the format of conventional short message according to the stored conventional short message, and transmit the received message delivery report based on the format of conventional short message to the entity for message interworking.

When the UE in the IMS domain is the called:

The entity for message interworking is adapted to convert a conventional short message, when receiving the conventional short message from a short message center, into a SIP-based message containing a request message delivery indicator, e.g. DN, and transmit the SIP-based message to the called UE in the IMS domain; receive a SIP-based message delivery report containing status information and convert the SIP-based message delivery report containing the status information into a message delivery report based on the format of conventional short message, and transmit the message delivery report based on the format of conventional short message to the short message center,

The called UE in the IMS domain is adapted to construct the SIP-based message delivery report containing the status information when receiving the SIP-based message containing the request message delivery indicator DN, and send the SIP-based message delivery report to the entity for message interworking.

The entity for message interworking is also adapted to determine the received message supports and needs format conversion before the format conversion of the message.

The format of conventional short message may include the MAP format. The SIP-based message delivery report may be embodied by an Immediate Message Disposition Notification (IMDN).

The embodiment of the invention also provides another entity for message interworking. The entity for message interworking may include an information receiving unit, a format converting and controlling unit and an information transmitting unit.

The information receiving unit is adapted to receive a SIP-based message containing a request message delivery indicator, e.g. DN, from a calling UE in an IMS domain, and send the received SIP-based message to the format converting and controlling unit; receive a message delivery report based on the format of conventional short message and send the message delivery report based on the format of conventional short message to the format converting and controlling unit.

The format converting and controlling unit is adapted to convert the received SIP-based message into a conventional short message, and transmit the conventional short message, converted from the SIP-based message and containing information indicating that the calling user equipment requests to receive a message delivery report, to the information transmitting unit; convert the received message delivery report based on the format of conventional short message into a SIP-based message delivery report, and send the SIP-based message delivery report to the information transmitting unit.

The information transmitting unit is adapted to transmit the conventional short message converted from the SIP-based message to a short message center; and transmit the SIP-based message delivery report to the calling UE.

An alternative is as follows:

The information receiving unit is adapted to receive a conventional short message from the short message center and send the received conventional short message to the format converting and controlling unit; receive a SIP-based message delivery report containing status information and send the SIP-based message delivery report to the format converting and controlling unit.

The format converting and controlling unit is adapted to convert the received conventional short message into a SIP-based message containing a request message delivery indicator, e.g. DN, and transmit the SIP-based message converted from the conventional short message to the information transmitting unit; convert the received SIP-based message delivery report into a message delivery report based on the format of conventional short message, and send the message delivery report based on the format of conventional short message to the information transmitting unit.

The information transmitting unit is adapted to transmit the SIP-based message converted from the conventional short message to the called UE; and transmit the message delivery report based on the format of conventional short message to the short message center.

The entity for message interworking may further include an authentication unit adapted to receive information from the information receiving unit, determine whether the received message is capable of supporting format conversion and whether the format conversion is needed, and send the received message to the format converting and controlling unit.

The format of conventional short message may include the MAP format. The SIP-based message delivery report may be embodied by an Immediate Message Disposition Notification (IMDN).

The embodiment of the invention also provides a UE. The UE includes the following units:

A transmitting and receiving unit, adapted to receive a SIP message containing a request message delivery indicator, e.g. DN, and send the SIP message to a constructing unit; to receive a SIP-based message delivery report from the constructing unit and transmit the message delivery report; and

A constructing unit, adapted to construct the SIP-based message delivery report containing status information according to the received SIP message and send the constructed message delivery report to the transmitting and receiving unit.

The SIP-based message delivery report may be embodied by an Immediate Message Disposition Notification (IMDN).

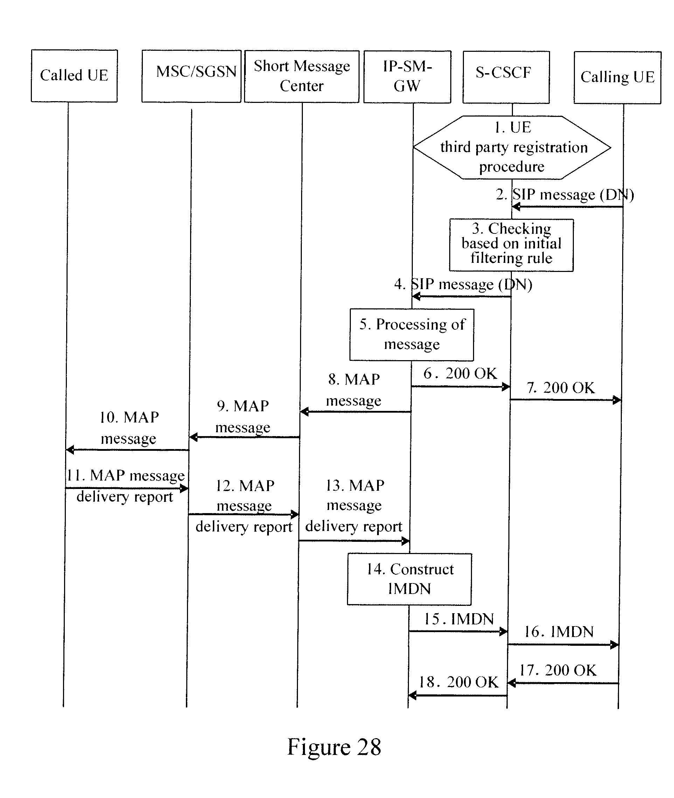

Figure 28 illustrates the processing of another message delivery report in the IMS MO procedure based on the architecture as shown in Figure 21. In the example, the IP message integrates the functions of an SMI AS, the format of conventional short message may include the MAP format, and the SIP-based message delivery report may be embodied by an Immediate Message Disposition Notification (IMDN).

Step 1. A UE registers onto an S-CSCF according to IMS registration procedure. Here the other network entities such as I-CSCF and P-CSCF in the IMS core network are not shown in the figure for the sake of simplicity. In addition, the UE has registered onto an IP message gateway according to the third party registration procedure.

Step 2. The calling UE constructs and sends a SIP-based message to the S-CSCF via the IMS domain. The SIP-based message may carry a CSID, a request message delivery report indicator (e.g. Disposition Notification, DN), a message identity and a time identify (Date Time).

Step 3. The S-CSCF checks the SIP-based message based on an initial filtering rule, to determine whether to send the SIP-based message to the IP message gateway. The checking may include: checking whether the user has subscribed for the message interworking service according to a CSID carried in the SIP-based message if the SIP-based message carries the CSID; checking whether the identity of a called user is TEL-URI or the like if the SIP-based message does not carry the CSID.

If it is checked that the user has subscribed for the message interworking service or the identity of the called user is TEL-URL based on the initial filtering rule, the step 4 is executed; otherwise, the procedure is performed according to the transmitting procedure of IMS immediate message in the existing technology.

Step 4. The S-CSCF forwards the SIP-based message to the IP message gateway.

Step 5. When receiving the SIP-based message containing the DN from the calling UE in the IMS domain, the IP message gateway judges whether the SIP-based message needs format conversion. If the SIP-based message needs format conversion, the IP message gateway converts the format of the SIP-based message, otherwise processes the SIP-based message according to the existing technologies.

The procedure for judging whether the SIP-based message needs format conversion may include the following:

The IP message gateway checks the identity of the called user. If the identity of the called user is in the form of TEL-URL (in the case that the calling user is an IMS user and the called user is a PS/CS user), the IP message gateway performs an ENUM query for the called user. If the ENUM query is successful, i.e. if the TEL-URI can be successfully converted into a SIP-URI, the IP message gateway transmits the SIP-based message to the IMS domain of the called user. The transmitting procedure is the same as that in the existing technologies. If the ENUM query fails, the IP message gateway checks the Content Type information in the message header of the SIP-based message. If the information carried in the Content Type is not in IMDN format, e.g. is not "message/imdn+xml", the IP message gateway authorizes the interworking service for the SIP-based message. If the authorization is successful, it may be determined that the SIP-based message needs format conversion. If the authorization fails, the IP message gateway returns a response indicating failure to the calling UE.

The procedure for converting the format of the SIP-based message may include the following:

The IP message gateway converts the SIP-based message into a conventional short message, i.e. the MAP format. The body of the MAP message converted from the SIP-based message may carry a mapping relationship with the Message Identity of the SIP-based message, for example, an Invoked id relevant with the Message Identity may be constructed in the body of the MAP message. The IP message gateway may store the relationship information between the Message Identity and the Invoked id, configure information indicating that the calling UE requests to receive a message delivery report in the body of the MAP message according to the message delivery report indicator, e.g. DN, carried in the SIP-based message. The IP message gateway may store the Message Identity of the SIP-based message and the relevant DN, the routing information (IMDN-Record-Route), the time identity (DateTime), or may store the whole SIP-based message according to a policy of the operator.

In other words, in the step 5, the IP message gateway implements the conversion between the SIP-based message and the message carried in MAP signaling (MAP-MT-FORWARD-SHORT-MESSAGE) based on the IMDN technology and the storage of information for subsequent processing of message delivery report. The above contents may be shown as in the following Table 3:

**Table 3**

| **SIP-based Message** | **Message carried in MAP signaling** |
|---|---|
| **(Immediate Message)** | **(MAP-MT-FORWARD-SHORT-MESSAGE)** |
| **1. Identity of the called** | |
| **Request-URI:** | **Destination address of short message** |
| | **(SM-RP-DA):** |
| E.164 address | |
| (format +CC NDC SN) | International Mobile Subscriber Identity (IMSI) |
| (e.g. as User info in SIP URI with user=phone, or as tel URI) | |
| Conversion manner: the IP message gateway converts the E.164 address in the Request-URI into a mobile phone number, MSISDN, obtains a corresponding IMSI by querying the HSS of the called side. | |

| **2. Identity of the calling** | |
|---|---|
| **P-Asserted-Identity:** | **Destination address of short message** |
| | **(SM-RP-OA)** |
| SIP URI | MSISDN |
| Conversion manner: the IP message gateway converts SIP URI into TEL URI by querying corresponding database, or converts the TEL URI information carried in the body of SIP-based message into MSISDN of the calling. | |

| **3. Message Identity** | |
|---|---|
| **Message ID** | **Invoked id** |
| Conversion manner: the IP message gateway constructs a relevant Invoked id in the MAP message according to Message carried in the body of SIP-based message, establishes and stores a mapping relationship between the SIP-based message and the MAP message for processing of the subsequent message delivery report. | |
| **4. Message body** | |
| **Content** | **SM-RP-UI** |
| Conversion manner: the IP message gateway converts the message body carried in SIP signaling into the message body carried in the MAP signaling | |

| **5. Request message delivery report indicator** | |
|---|---|
| **Disposition Notification** | **Identity indicating the calling requests message delivery report** |
| Processing manner: the IP message gateway inserts information indicating that the calling requests to receive a message delivery report in the MAP message according to DN carried in the SIP-based message, so that the short message center may return a message delivery report to the IP message gateway. | |

| **6. Message routing information** | |
|---|---|
| **IMDN-Record-Route** | |
| Processing manner: the IP message gateway stores the message routing information and the Message ID carried in the SIP-based message in a one-to-one manner for the routing of subsequent SIP-based message delivery report (e.g. IMDN). | |

| **7. Time Identity** | |
|---|---|
| **DateTime** | |
| Processing manner: the IP message gateway stores the time identify information and the Message ID carried in the SIP-based message in a one-to-one manner for the processing of subsequent SIP-based message delivery report. | |

Step 6. The IP message gateway returns a response, e.g. 200 OK, indicating the successful receipt of the message to the S-CSCF.

Step 7. The S-CSCF returns the response, e.g. 200 OK, indicating the successful receipt of the message to the calling UE.

The steps 6-7 may alternatively be performed before the step 5.

Step 8. The IP message gateway transmits the MAP message converted from the SIP-based message to the short message center.

Step 9. The short message center selects the route. The short message center obtains the routing information of the called user via the HSS, and forwards the MAP message via a best route, through a conventional routing entity, such as MSC/SGSN.

Step 10. The conventional routing entity (such as MSC/SGSN) forwards the MAP message to the called user. If the forwarding fails, e.g. in the cases that the user is not in the service area or if the memory of the UE is full, etc, the conventional routing entity generates a MAP message delivery report and returns the MAP message delivery report to the short message center. The short message center processes the stored short message according to the information contained in the MAP message delivery report. For example, in the case of permanent failure, i.e. when there is not such called user, the short message center deletes the stored short message. In the case of temporary failure, i.e. when the memory of the UE is full, the short message center may store short message temporarily for retransmitting the short message when recovery from the failure. Then the step 12 is executed. If the forwarding is successful, the step 11 is executed.

Step 11. The called UE constructs a MAP message delivery report containing indication information relevant with the MAP message and returns the MAP message delivery report to the conventional routing entity.

Step 12. The conventional routing entity forwards MAP message delivery report to the short message center.

Step 13. The short message center forwards the MAP message delivery report to the IP message gateway according to the MAP message delivery report.

Step 14. When receiving the MAP message delivery report, the IP message gateway judges whether a message delivery report is needed to be returned to the calling UE. If yes, the IP message gateway converts the format of the MAP message delivery report, otherwise the IP message gateway does not convert the format of the MAP message delivery report.

The procedure for judging whether a message delivery report is needed to be returned to the calling UE may include the following:

The IP message gateway judges whether its own status is for example "forbidden" to transmit a message delivery report. If its own status is "forbidden" to transmit a message delivery report, the IP message gateway determines not to send a message delivery report to the calling UE.

If its own status is not "forbidden" to transmit a message delivery report, the IP message gateway further judges according to the request message delivery report indicator DN in the SIP-based message from the calling UE and according to whether the MAP message delivery report carries a failure cause:

If the request message delivery report indicator DN indicates that that the calling UE requests a message delivery report indicating success and the MAP message delivery report does not carry a failure cause, the IP message gateway determines to send a message delivery report to the calling UE.

If the request message delivery report indicator DN indicates that that the calling UE requests a message delivery report indicating failure and the MAP message delivery report carries a failure cause, the IP message gateway determines to send a message delivery report to the calling UE.

When determining to send a message delivery report to the calling UE, the IP message gateway performs the following operations:

The IP message gateway finds the DN and routing information (IMDN-Record-Route) and time identity (DateTime) corresponding to the identity of the SIP-based message according to the indication information relevant with the MAP message in the MAP message delivery report and the stored mapping relationship between the MAP message and the SIP-based message. The IP message gateway constructs a SIP-based message delivery report, i.e. IMDN, according to the type of message delivery report indicated by the DN, and converts the IMDN-Record-Route into IMDN-Route so that the IMDN can be returned to the calling UE in a direction adverse to the path transmitting the SIP-based message, and inserts the time identity (DateTime) into the message body of the IMDN.

In other words, the step 14 implements the conversion between the MAP message delivery report (MAP-Delivery-Report) and SIP-based message delivery report (i.e. IMDN). The contents may be shown in the following table 4.

**Table 4**

| **MAP message delivery report** | **SIP message delivery report** |
|---|---|
| **(MAP-Delivery-Report)** | **IMDN** |
| **1. Identity of the calling** | |
| **MSISDN:** | **P-Asserted-Identity:** |
| IMSI | TEL URI |
| Conversion manner: the IP message gateway converts the address of MSISDN carried in the MAP message delivery report into the TEL URI format. | |

| **2. Message Identity** | |
|---|---|
| | **Message ID** |
| Processing manner: the IP message gateway finds the relevant Message ID stored in step 5 according to the Invoked id in the MAP message corresponding to the MAP message delivery report. | |

| **3. Routing Information** | |
|---|---|
| | **IMDN Route** |
| Processing manner: the IP message gateway finds the stored corresponding IMDN-Record-Route information according to the Message ID, copies the routing information into the message header IMDN Route, so that the SIP-based message delivery report can be returned in a direction adverse to the path transmitting the SIP-based message | |

| **4. Time Identity** | **DateTime** |
|---|---|
| Processing manner: the IP message gateway finds the stored Time Identity information according to the Message ID. | |

| **5. Message Response Report** | |
|---|---|
| **Failure Cause** | **IMDN** |
| Processing manner: the message body carried by the message delivery report of MAP signaling is converted into the message body carried by the message delivery report of SIP signaling. | |
| If the request message delivery report indicator DN indicates that the calling receives a message delivery report indicating success, i.e. "positive-delivery", an IMDN having status indicating success is generated; | |
| If the request message delivery report indicator DN indicates that the calling receives a message delivery report indicating failure, i.e. "negative-delivery", an IMDN having status indicating failed delivery is generated; the status may be different according to a policy, for example: | |
| If the failure cause is a permanent failure, e.g. there is not the called user, the IMDN generated may carry a status such as "failed". If the failure cause is a temporary failure, e.g. the called user is not in the service area, the IP message gateway may generate an IMDN having status such as "processed" or "stored" according to a policy of the operator, or may generate an IMDN having status "failed". | |

Step 15. The IP message gateway forwards the IMDN to the S-CSCF.

Step 16. The S-CSCF forwards the IMDN to the calling UE.

Steps 17-18. The calling UE returns a response, e.g. 200 OK, indicating the successful receipt of the IMDN to the IP message gateway.

In this way, a user of SIP-based message service is enabled to request a called user (no matter the called user is a conventional short message user or a SIP-based message service user) and return a message delivery report, thereby ensuring the consistency of the user's experience.

The embodiment of the invention also provides a system for processing message delivery reports during interworking between SIP-based messages and conventional short messages. The system for processing message delivery reports may include a UE in an IMS domain, a UE supporting conventional short messages, an entity for message interworking and a short message center.

When the UE in the IMS domain is the calling:

The entity for message interworking is adapted to receive a SIP-based message containing a request message delivery indicator, e.g. DN, from the calling UE in the IMS domain, convert the received SIP-based message into a conventional short message, and transmit a conventional short message, converted from the SIP-based message and containing information indicating that the calling UE requests to receive a message delivery report, to the short message center; receive a message delivery report based on the format of conventional short message, convert the message delivery report based on the format of conventional short message into a SIP-based message delivery report, and send the SIP-based message delivery report to the calling UE.

The short message center is adapted to forward the conventional short message to a called UE, receive a message delivery report based on the format of conventional short message, and transmit the received message delivery report based on the format of conventional short message to the entity for message interworking.

When the UE in the IMS domain is the called:

The entity for message interworking is adapted to convert a conventional short message, when receiving the conventional short message from a short message center, into a SIP-based message containing a request message delivery indicator, e.g. DN, and transmit the SIP-based message to a called UE in the IMS domain; receive a SIP-based message delivery report containing status information and convert the SIP-based message delivery report containing the status information into a message delivery report based on the format of conventional short message, and transmit the message delivery report based on the format of conventional short message to the short message center.

The called UE in the IMS domain is adapted to construct the SIP-based message delivery report containing the status information when receiving the SIP-based message containing the request message delivery indicator, e.g. DN, and send the SIP-based message delivery report to the entity for message interworking.

The entity for message interworking is also adapted to determine the received message supports and needs format conversion before the format conversion of the message.

The format of conventional short message may include the MAP format. The SIP-based message delivery report may be embodied by an Immediate Message Disposition Notification (IMDN).

The embodiment of the invention also provides another entity for message interworking. The entity for message interworking may include an information receiving unit, a format converting and controlling unit and an information transmitting unit.

The information receiving unit is adapted to receive a SIP-based message containing a request message delivery indicator, e.g. DN, from a calling UE in an IMS domain, and send the received SIP-based message to the format converting and controlling unit; receive a message delivery report based on the format of conventional short message and send the message delivery report based on the format of conventional short message to the format converting and controlling unit.

The format converting and controlling unit is adapted to convert the received SIP-based message into a conventional short message, and transmit a conventional short message, converted from the SIP-based message and containing information indicating that the calling user equipment requests to receive a message delivery report, to the information transmitting unit; convert the received message delivery report based on the format of conventional short message into a SIP-based message delivery report, and send the SIP-based message delivery report to the information transmitting unit.

The information transmitting unit is adapted to transmit the conventional short message converted from the SIP-based message to a short message center; and transmit the SIP-based message delivery report to the calling UE.

An alternative is as follows:

The information receiving unit is adapted to receive a conventional short message from the short message center and send the received conventional short message to the format converting and controlling unit; receive a SIP-based message delivery report containing status information and send the SIP-based message delivery report to the format converting and controlling unit.

The format converting and controlling unit is adapted to convert the received conventional short message into a SIP-based message containing a request message delivery indicator, e.g. DN, and transmit the SIP-based message converted from the conventional short message to the information transmitting unit; convert the received SIP-based message delivery report into a message delivery report based on the format of conventional short message, and send the message delivery report based on the format of conventional short message to the information transmitting unit.

The information transmitting unit is adapted to transmit the SIP-based message converted from the conventional short message to the called UE; and transmit the message delivery report based on the format of conventional short message to the short message center.

The entity for message interworking may further include an authentication unit adapted to receive information from the information receiving unit, determine whether the received message is capable of supporting format conversion and whether the format conversion is needed, and send the received message to the format converting and controlling unit.

The format of conventional short message may include the MAP format. The SIP-based message delivery report may be embodied by an Immediate Message Disposition Notification (IMDN).

The embodiment of the invention also provides a UE. The UE includes the following units:

A transmitting and receiving unit, adapted to receive a SIP message containing a request message delivery indicator, e.g. DN, and send the SIP message to a constructing unit; to receive a SIP-based message delivery report from the constructing unit and transmit the message delivery report; and

A constructing unit, adapted to construct the SIP-based message delivery report containing status information according to the received SIP message and send the constructed message delivery report to the transmitting and receiving unit.

The SIP-based message delivery report may be embodied by an Immediate Message Disposition Notification (IMDN).

**Third Embodiment**

An SMI AS is directly connected with an IP message gateway via a MAP interface. The IP message gateway may obtain the address information of the SMI AS from an HSS through the extended MAP protocol, or may set the priority of returning the address of the SMI AS to be the highest via an internal logic of the HSS. In this way, the IP message gateway may send a packaged SIP-based message to the SMI AS directly without the S-CSCF as an intermediary. The SMI AS de-packages and converts the SIP-based message for storing and forwarding.

In the solution, when the user is required to support service level interworking, a third party registration to the SMI AS is needed. During the third party registration, the SMI AS stores its address in the HSS, the registration procedure is the same as that according to the first embodiment. Therefore, an S-CSCF may forward the message to the SMI AS through an initial filtering rule only when the user supports service level interworking.

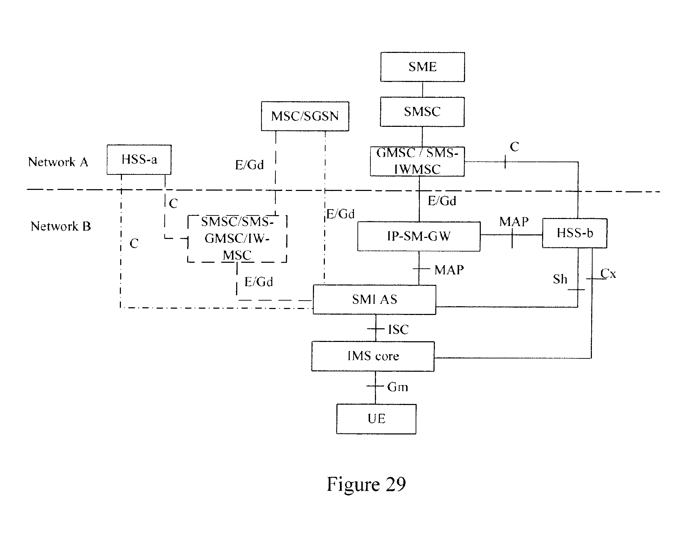

Figure 29 is a schematic diagram illustrating an architecture for interworking between SIP messages and conventional short messages according to the third embodiment of the invention. The architecture includes a conventional short message system, an IMS core network, an IP message gateway, UEs, and a newly added message interworking entity (SMI AS) adapted to convert message formats according to the embodiment of the invention.

In the embodiment as shown in Figure 29, the SMI AS may be a newly added network entity, or may be a new module added in an existing network entity. The SMI AS is connected with the IMS core network via an ISC interface defined by 3GPP. The selected protocol is SIP protocol. When the SMI AS integrates the functions of a conventional short message center, the conventional short message system may include an HSS and MSC and/or SGSN located in the called network. In addition, the SMI AS may be connected with the HSS in the called network via a C interface, be connected with the MSC/SGSN in the called network via an E/Gd interface. When the SMI AS has not the functions of a conventional short message center, the conventional short message system may include a conventional short message center. In this case, the SMI AS is connected to conventional short message center via an E/Gd interface. The SMI AS is directly connected with the IP message gateway via a MAP interface. Compared with the architecture as shown in Figure 4, in the architecture as shown in the third embodiment the MAP interface is used to connect the SMI AS and the IP message gateway. In contrast, in the architecture as shown in Figure 4 the E/Gd interface is used to connect the SMI AS and the IP message gateway.

According to the architecture as shown in Figure 29, the third party registration procedure for the IP message gateway is similar to that according to the first embodiment, the IMS-MO (Message Originating in IMS domain) procedure for service level interworking between SIP-based messages and conventional short messages is also similar to that according to the first embodiment. Therefore, the two procedures are not repeated herein.

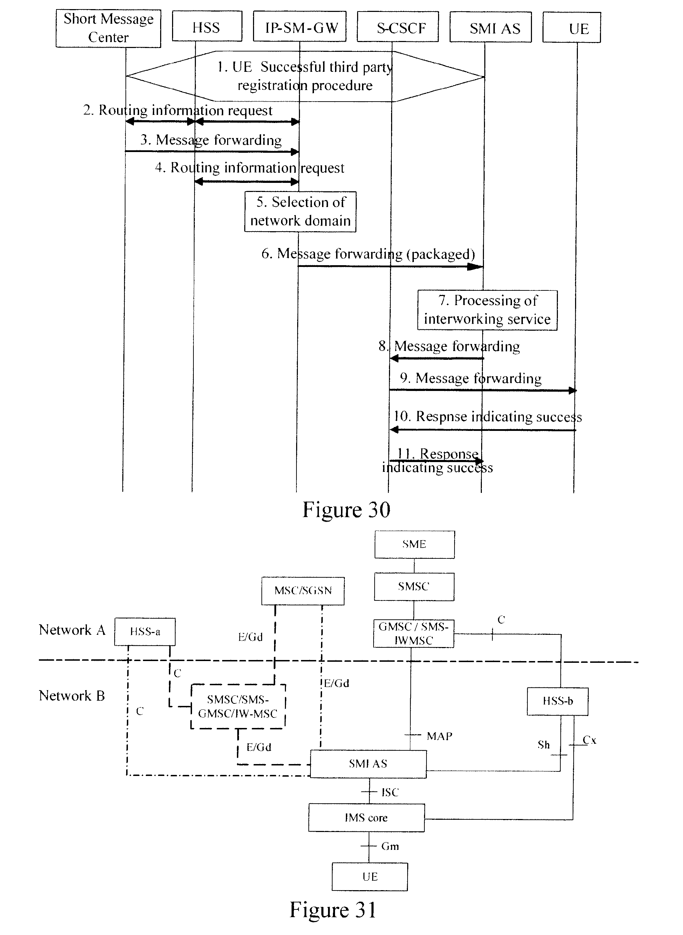

Figure 30 illustrates an IMS-MT procedure for interworking of the service level between SIP messages and conventional short messages. For the sake of simplicity, the exemplary procedure uses the transparent mode as an example when describing the processing of responses. The processing in non-transparent mode is similar and is omitted herein.

As shown in Figure 30 which is a schematic diagram illustrating the IMS-MT procedure in a transparent mode for interworking of the service level between SIP messages and conventional short messages based on the architecture as shown in Figure 29, the IMS-MT procedure is as follows:

Step 1. A UE registers onto an S-CSCF according to IMS registration procedure. In addition, the UE has registered onto an IP message gateway and the SMI AS according to the third party registration procedure.

Step 2. The conventional short message center sends a routing information query request to the HSS. The HSS forwards the routing information query request to the IP message gateway, and the IP message gateway returns the address of the IP message gateway to the conventional short message center.

Step 3. The conventional short message center sends a conventional short message to the IP message gateway.

Step 4. The IP message gateway sends a routing information query request to the HSS. The HSS may return the address(es) of the MSC and/or SGSN and the address of SMI AS via the extended MAP protocol. Alternatively, the HSS may set the priority of returning the address of SMI AS to be the highest via its internal logic and return the address of SMI AS and the address(es) of the MSC and/or SGSN via MAP address.

Step 5. The IP message gateway selects a domain according to a preference of the user and a policy of the operator, and based on the address of the SMI AS and the address(es) of the MSC/SGSN obtained from the HSS.

Step 6. If the selected domain is an IMS domain, the IP message gateway checks whether to transmit the received conventional short message to the SMI AS. The checking may include: checking the subscription information of the called user obtained during the third party registration. If the called user supports the service level interworking but the current UE of the called user does not support SMS protocol stacks, or the preference of the called user or a policy of the operator requires the service level interworking, the IP message gateway forwards the conventional short message directly to the SMI AS via the MAP interface. Otherwise, the IP message gateway delivers, according to the existing technology, a packaged SIP-based message according to the address of an S-CSCF in the IMS domain stored during the third party registration.

Step 7. The SMI AS authorizes the interworking service, in other words, the SMI AS obtains the identity of the called user from the received conventional short message and authorizes the interworking service according to the subscription information registered by the UE corresponding to the identity. If the authorization is successful, the SMI AS further checks whether the message body of the conventional short message can be converted into a SIP-based message. If the message body of the conventional short message can be converted into a SIP-based message, the SMI AS converts the conventional short message into a SIP-based message and stores the SIP-based message converted from the conventional short message. If the authorization fails, the SMI AS returns a failure report to the S-CSCF.

Step 8. The SMI AS returns to the S-CSCF the SIP-based message converted from the conventional short message.

Step 9. The S-CSCF delivers the received SIP-based message to the called UE via the IMS domain.

Step 10. The called user returns a response indicating the successful receipt of the SIP-based message to the S-CSCF.

Step 11. The S-CSCF forwards the response indicating the success receipt of the SIP-based message to the SMI AS.

The SMI AS may generate a Delivery report according to the response indicating the success receipt of the SIP-based message when receiving the response forwarded from the S-CSCF, and send the Delivery report to the IP message gateway directly via the MAP interface. The IP message gateway forwards the Delivery report to the short message center. The short message center sends a status report to the HSS for data updating.

The IMS-MT procedure for interworking of the service level between SIP-based messages and conventional short messages as shown in Figures 29-30 includes a transparent mode and a non-transparent mode. The S-CSCF may route the SIP-based message to the SMI AS through an initial filtering rule only when the user has successfully registered onto the SMI AS.

In addition, based on the architecture and procedure for interworking between SIP-based messages and conventional short messages, the embodiment may also provide two types of message interworking entities, which are the same as those as shown in Figures 10-20 according to the first embodiment and are not repeated herein.

**Fourth Embodiment**

An SMI AS may be directly connected with a conventional short message routing entity via a MAP interface, or via an intermediary router. The conventional short message routing entity may obtain the address information of the SMI AS from an HSS through the extended MAP protocol, or may set the priority of returning the address of the SMI AS to be the highest via an internal logic of the HSS so that the address of the SMI AS and the address of MSC or SGSN may be returned via the MAP protocol. The conventional short message routing entity may select a domain according to a preference of a user and a policy of an operator. If the selected domain is an IMS domain, the conventional short message routing entity routes the short message directly to the SMI AS. The solution of the fourth embodiment is similar to that of the third embodiment; the difference lies in that a conventional short message is routed to the SMI AS by a conventional short message center, rather than through an IP message gateway.

Figure 31 is a schematic diagram illustrating an architecture for interworking between SIP messages and conventional short messages according to the fourth embodiment of the invention. The architecture may include a conventional short message system, an IMS core network, UEs and a message interworking entity, e.g. an SMI AS, capable of massage format conversion.

As shown in Figure 31, the SMI AS may be a newly added network entity, or may be a new module added in an existing network entity. The SMI AS is connected with the IMS core network via an ISC interface defined by 3GPP. The selected protocol is SIP protocol.

In the case that the IMS domain in which the SMI AS is located serves as the originating domain, if the SMI AS integrates the functions of a conventional short message center, the conventional short message system may include an HSS and an MSC and/or SGSN located in the called network. In addition, the SMI AS may be connected to the HSS of the called network via a C interface, and is connected to the MSC/SGSN of the called network via an E/Gd interface. If the SMI AS does not integrate the functions of a conventional short message center, the conventional short message system may include a conventional short message center in the calling network. The SMI AS may be connected with the conventional short message center in the calling network via an E/Gd interface.

In the case that the IMS domain in which the SMI AS is located serves as the terminating domain, the SMI AS may be connected with a conventional short message routing entity in the called network via a MAP interface directly, or via an intermediary router. The conventional short message routing entity may include a GMSC and/or SMS-IWMSC.

The embodiments described above are only exemplary preferred embodiments of the invention, and should not be construed as a limitation to the protection scope of the invention. Various modifications, equivalent substitution and variations made to the invention within the spirit and principle of the invention shall fall within the protection scope of the invention.

## Claims

1. A method for interworking between Session Initiation Protocol, SIP, messages and conventional short messages, **characterized in that**, in an originating procedure of an Internet Protocol Multimedia Subsystem, IMS, domain, the method comprises:
receiving, by a Service Call Session Control Function, S-CSCF, a SIP-based message from a User Equipment, UE, and transmitting the SIP-based message to an Internet Protocol, IP, message gateway when determining that the SIP-based message needs to be transmitted to the IP message gateway; and
converting, by the IP message gateway, the received SIP-based message into a conventional short message, and transmitting the conventional short message converted from the SIP-based message to a conventional short message system.

2. The method according to claim 1, **characterized in that** determining that the SIP-based message needs to be transmitted to the IP message gateway is performed by the S-CSCF according to an initial filtering rule and comprises:
checking whether a feature tag identifying capability carried by the SIP-based message indicates a packaged IMS message, or checking whether a user has subscribed for a service level interworking service, or checking whether an information identity of Communication Service Identity, CSID, carried by the SIP-based message indicates the service level interworking service,
if the result of one of the above checkings is positive, determining that the SIP-based message needs to be transmitted to the IP message gateway.

3. The method according to claim 1, **characterized in that** before converting by the IP message gateway the received SIP-based message into the conventional short message, the method further comprises:
performing a conversion checking, and converting the received SIP-based message into the format of conventional short message if the conversion checking passes;
wherein the conversion checking comprises:
judging, by the IP message gateway, whether a service level interworking is required.

4. The method according to claim 3, **characterized in that** judging by the IP message gateway whether the service level interworking is required is performed according to a preference of a user or a policy of an operator, or the IP message gateway determines that the service level interworking is required if a called IMS domain is unreachable.

5. The method according to claim 3, **characterized in that** after the conversion checking passes, the method further comprises: authorizing, by the IP message gateway, an interworking service, and converting the received SIP-based message into the conventional short message if the authorization is successful.

6. The method according to claim 3, **characterized in that** if the conversion checking does not pass, the method further comprises: returning, by the IP message gateway, a failure report to the UE.

7. The method according to claim 1, **characterized in that** before transmitting the conventional short message converted from the SIP-based message to the conventional short message system, the method further comprises:
disassembling and assembling the conventional short message.

8. The method according to claim 1, **characterized in that** converting by the IP message gateway the received SIP-based message into the format of conventional short message comprises:
converting a message body of the SIP-based message and converting identities of users.

9. The method according to claim 1, **characterized by** further comprising:
returning, by the IP message gateway, a SIP-based response message when receiving the SIP-based message; or receiving, by the IP message gateway, a report indicating receipt of the conventional short message returned by the conventional short message system, converting the report into a SIP-based response message and transmitting the SIP-based response message to the UE.

10. The method according to claim 1, **characterized by** further comprising:
charging, by the IP message gateway, an interworking service.

11. A method for processing a message delivery report during interworking between Session Initiation Protocol, SIP, messages and conventional short messages based on the method according to claim 1, **characterized by** comprising:
receiving, by an entity for message interworking, a SIP-based message containing a request message delivery indicator from a calling Internet Protocol Multimedia Subsystem, IMS, user equipment, UE, converting the received SIP-based message into a format of conventional short message, and transmitting a conventional short message converted from the SIP-based message to a short message center;
forwarding, by the short message center, the conventional short message to a called UE, receiving a message delivery report based on a format of conventional short message, and transmitting the received message delivery report based on the format of conventional short message to the entity for message interworking; and
converting, by the entity for message interworking, the received message delivery report based on the format of conventional short message into a SIP-based message delivery report, and transmitting the SIP-based message delivery report to the calling IMS UE.

12. The method according to claim 11, **characterized in that:**
the format of conventional short message is based on a Mobile Application Part, MAP, format;
converting the received SIP-based message into the MAP format comprises:
converting an E.164 address in a Request Uniform Resource Identifier, Request URI, of a called UE into an international mobile subscriber identity of the called UE, converting a SIP URI of the calling UE into a mobile phone number of the calling UE, converting a message body carried in SIP signaling into a message body carried in MAP signaling, and constructing an indication indicating that the calling user requests a message delivery report in the message body carried in MAP signaling according to the request message delivery indicator carried in the SIP-based message.

13. The method according to claim 12, **characterized in that** converting the received SIP-based message into the MAP format further comprises:
storing routing information carried in the SIP-based message and a message identity of the SIP-based message correspondingly; and
storing time information carried in the SIP-based message and the message identity of the SIP-based message correspondingly.

14. The method according to claim 11, **characterized by** further comprising:
determining, by the entity for message interworking, whether to return the message delivery report to the calling UE before converting the received message delivery report based on the format of conventional short message into a SIP-based message delivery report.

15. The method according to claim 14, **characterized in that** determining by the entity for message interworking whether to return the message delivery report to the calling UE comprises:
judging, by the entity for message interworking, whether a status of the entity for message interworking indicates prohibiting transmission of the message delivery report; if the status of the entity for message interworking indicates prohibiting transmission of the message delivery report, determining not to return the message delivery report to the calling UE;
if the status of the entity for message interworking does not indicate prohibiting transmission of the message delivery report, judging, by the entity for message interworking, according to the request message delivery indicator carried in the SIP-based message from the calling UE and according to whether the message delivery report based on the format of conventional short message carries a parameter of failure cause:
if the request message delivery indicator indicates that the calling UE receives a message delivery report indicating successful delivery and the message delivery report based on the format of conventional short message does not carry a parameter of failure cause, determining to return the message delivery report to the calling UE; and
if the request message delivery indicator indicates that the calling UE receives a message delivery report indicating failed delivery and the message delivery report based on the format of conventional short message carries a parameter of failure cause, determining to return the message delivery report to the calling UE.

16. The method according to claim 13, **characterized in that:**
the format of conventional short message is based on a Mobile Application Part, MAP, format;
converting by the entity for message interworking the received message delivery report based on the format of conventional short message into the SIP-based message delivery report comprises:
converting a mobile phone number of a calling UE into a SIP URI of the calling UE, constructing an invoked identity in a message body of the message delivery report carried in MAP signaling relevant to the SIP-based message according to the message identity carried in the SIP-based message, converting the message body of the message delivery report carried in MAP signaling into a message body of the message delivery report carried in SIP signaling, finding the stored routing information and the stored time information according to the message identity, and inserting the routing information and the time information into the SIP-based message delivery report so as to return the SIP-based message delivery report in a direction adverse to a direction of transmitting the SIP-based message from the calling UE.

17. The method according to claim 16, **characterized in that** converting the message body of the message delivery report carried in MAP signaling into the message body of the message delivery report carried in SIP signaling comprises:
if the request message delivery indicator indicates that the calling UE receives a message delivery report indicating successful delivery, generating an immediate message disposition notification having a status indicating successful delivery;
if the request message delivery indicator indicates that the calling UE receives a message delivery report indicating failed delivery, generating an immediate message disposition notification having a status indicating un-delivered;
the status indicating un-delivered comprises: being processed, stored, or failed.

18. A method for interworking between Session Initiation Protocol, SIP, messages and conventional short messages, **characterized in that**, in a terminating procedure of an Internet Protocol Multimedia Subsystem, IMS, domain, the method comprises:
receiving, by an Internet Protocol, IP, message gateway, a conventional short message from a conventional short message system, selecting an IMS domain for forwarding the conventional short message according to a preset policy; and
converting, by the IP message gateway, the received conventional short message into a SIP-based message, and transmitting the SIP-based message converted from the conventional short message to an user equipment, UE, via the IMS domain.

19. The method according to claim 18, **characterized in that,** after configuring the IP message gateway, the method further comprises: registering, by the UE in the IMS domain, into the IP message gateway;
converting by the IP message gateway the received conventional short message into the format of SIP-based message comprises: performing an interworking checking to determine whether to convert the received conventional short message into the format of SIP-based message;
performing the interworking checking to determine whether to convert the received conventional short message into the format of SIP-based message comprises:
checking, by the IP message gateway, whether the UE supports service level interworking and supports conventional short message protocol stacks according to downloaded subscription data of a user obtained when the user registers, if yes, further checking whether a message body of the conventional short message can be converted, and if yes, determining to convert the received conventional short message into the format of SIP-based message;
or,
checking whether a preference of the user or a policy of an operator requires service level interworking, if yes, further checking whether a message body of the conventional short message can be converted, and if yes, determining to convert the received conventional short message into the format of SIP-based message.

20. The method according to claim 19, **characterized in that,** after the IP message gateway obtains the subscription data of the user and before checking whether the UE supports the service level interworking, the method further comprises:
checking whether the UE supports conventional short messages according to the subscription data of the user, if the UE supports conventional short messages, converting the received conventional short message into a format of packaged SIP-based message and transmitting the packaged SIP-based message to the UE via the IMS domain, if the UE does not support conventional short messages, converting the received conventional short message into the format of SIP-based message.

21. The method according to claim 19, **characterized in that** if determining not to convert the received conventional short message into the format of SIP-based message according to the interworking checking, the method further comprises:
converting the received conventional short message into a packaged SIP-based message and transmitting the packaged SIP-based message to the UE via the IMS domain.

22. The method according to claim 18, **characterized in that** transmitting the SIP-based message converted from the conventional short message to the UE via the IMS domain comprises:
transmitting, by the IP message gateway, the SIP-based message to a Service Call Session Control Function, S-CSCF, checking, by the S-CSCF, the SIP-based message based on initial filtering rule, and forwarding the SIP-based message to the UE after the checking;
returning, by the UE, a response indicating successful receipt to the S-CSCF, and forwarding, by the S-CSCF, the response indicating successful receipt to the IP message gateway.

23. The method according to claim 18, **characterized in that,** before transmitting the SIP-based message converted from the conventional short message to the UE via the IMS domain, the method further comprises:
converting, by the IP message gateway, identities of calling and called users into a format identifiable by an IMS network, and selecting to store the SIP-based message converted from the conventional short message according to a preference of an operator.

24. The method according to claim 18, **characterized in that**, before transmitting the SIP-based message converted from the conventional short message to the UE via the IMS domain, the method further comprises:
disassembling and assembling the SIP-based message.

25. The method according to claim 18, **characterized in that,** after the UE receives the SIP-based message converted from the conventional short message successfully, the method further comprises:
generating, by the IP message gateway, a Delivery report in a format identifiable by a conventional short message system, and transmitting the Delivery report to a short message center;
sending, by the short message center, a status report to an Home Subscriber Server, HSS, when receiving the Delivery report to update a database of the HSS.

26. A method for processing a message delivery report during interworking between Session Initiation Protocol, SIP, messages and conventional short messages based on the method according to claim 20, **characterized by** comprising:
receiving, by an entity for message interworking, a conventional short message from a short message center, converting the received conventional short message into a SIP-based message containing a request message delivery indicator and transmitting the SIP-based message to a called Internet Protocol Multimedia Subsystem User Equipment, IMS UE;
constructing, by the called IMS user equipment, a SIP-based message delivery report containing status information when receiving the SIP-based message containing the request message delivery indicator, and sending the SIP-based message delivery report to the entity for message interworking; and
converting, by the entity for message interworking, the received SIP-based message delivery report into a message delivery report based on the format of conventional short message, and transmitting the message delivery report based on the format of conventional short message to the short message center.

27. The method according to claim 26, **characterized in that:**
the format of conventional short message comprises a Mobile Application Part, MAP, format;
converting the received conventional short message into the SIP-based message comprises:
converting an international mobile subscriber identity of the called UE into a SIP Uniform Resource Identifier, SIP URI, of the called UE, converting a mobile phone number of a calling UE into a SIP URI or TEL URI of the calling UE, constructing a message identity in a message body carried in SIP signaling relevant to the MAP message according to an invoked identity carried in the MAP message, converting a message body carried in MAP signaling into a message body carried in SIP signaling, and constructing a request message delivery report indicator of the SIP-based message according to a policy of operator.

28. The method according to claim 27, **characterized in that** converting the received conventional short message into the SIP-based message further comprises:
configuring routing information and time information in the SIP-based message.

29. The method according to claim 26, **characterized by** further comprising:
determining, by the entity for message interworking, whether to return the message delivery report to the short message center before converting the received SIP-based message delivery report into the message delivery report based on the format of conventional short message.

30. The method according to claim 29, **characterized in that** determining by the entity for message interworking whether to return the message delivery report to the short message center comprises:
judging, by the entity for message interworking, whether status information in the received SIP-based message delivery report indicates delivered or failed, if yes, determining to return the message delivery report to the short message center; otherwise, determining not to return the message delivery report to the short message center.

31. The method according to claim 27, **characterized in that:**
the format of conventional short message is based on a Mobile Application Part, MAP, format;
converting by the entity for message interworking the received SIP-based message delivery report into a message delivery report based on the format of conventional short message comprises:
converting a SIP URI of the calling UE into a mobile phone number of the calling UE, constructing a message type indicator indicating type of message, constructing a parameter indicator indicating an optional parameter, and converting a message body of the message delivery report carried in SIP signaling into a message body of the message delivery report carried in MAP signaling.

32. The method according to claim 31, **characterized in that** converting the message body of the message delivery report carried in SIP signaling into the message body of the message delivery report carried in MAP signaling comprises:
if status information in the SIP-based message delivery report received by the entity for message interworking indicates delivered, constructing an MAP message delivery report not containing a failure causer;
if the status information in the SIP-based message delivery report received by the entity for message interworking indicates failed, constructing an MAP message delivery report containing a failure causer indicating there is not the called user.

33. A method for interworking between Session Initiation Protocol, SIP, messages and conventional short messages, **characterized in that,** in an originating procedure of an Internet Protocol Multimedia Subsystem, IMS, domain, the method comprises:
receiving, by a Service Call Session Control Function, S-CSCF, a SIP-based message transmitted from a User Equipment, UE, and transmitting the SIP-based message to a Short Message/IMS messaging Interworking Application Server, SMI AS, when determining that the SIP-based message needs to be transmitted to the SMI AS; and
converting, by the SMI AS, the received SIP-based message into a format of conventional short message, and transmitting a conventional short message converted from the SIP-based message to a conventional short message system.

34. The method according to claim 33, **characterized in that:**
before the UE transmits the SIPP-based message, the method further comprises: registering, by the UE in the IMS domain, into the SMI AS;
before converting by the SMI AS the received SIP-based message into the format of conventional short message, the method further comprises: obtaining an identity of the UE from the received SIP-based message, authorizing interworking service according to subscription information registered by the UE corresponding to the identity, if the authorization is successful, checking whether a message body of the SIP-based message can be converted, if the message body of the SIP-based message can be converted, converting the SIP-based message into the format of conventional short message, if the message body of the SIP-based message can not be converted, returning a failure report to the S-CSCF.

35. The method according to claim 34**, characterized in that:**
determining that the SIP-based message needs to be transmitted to the SMI AS is performed by the S-CSCF according to an initial filtering rule and comprises:
checking whether a feature tag identifying capability carried by the SIP-based message indicates a packaged IMS message, or checking whether a user has subscribed for a service level interworking service, or checking whether an information identity of Communication Service Identity, CSID, carried by the SIP-based message indicates the service level interworking service,
if a result of one of the above checkings is positive, determining that the SIP-based message needs to be transmitted to the SMI AS.

36. The method according to claim 33, **characterized in that** before converting by the SMI AS the received SIP-based message into the format of conventional short message after receiving the SIP-based message, the method further comprises:
judging, by the SMI AS, whether a service level interworking is required, if the service level interworking is required, converting the received SIP-based message into the format of conventional short message.

37. The method according to claim 36, **characterized in that** judging by the SMI AS whether the service level interworking is required is performed according to a preference of a user or a policy of an operator, or the SMI AS determines that the service level interworking is required if a called IMS domain is unreachable.

38. The method according to claim 36, **characterized in that** if judging by the SMI AS that the service level interworking is required, before converting the received SIP-based message into the format of conventional short message, the method further comprises:
authorizing, by the SMI AS, an interworking service, and converting the received SIP-based message into the format of conventional short message if the authorization is successful.

39. The method according to claim 33 or 34, **characterized by** further comprising:
returning, by the SMI AS, a SIP-based response message to the UE when receiving the conventional short message transmitted by the conventional short message system; or receiving, by the SMI AS, a report indicating receipt of the conventional short message returned by the conventional short message system, converting the report into a SIP-based response message and transmitting the SIP-based response message to the UE via the IMS network.

40. A method for interworking between Session Initiation Protocol, SIP, messages and conventional short messages, **characterized in that**, in a terminating procedure of an Internet Protocol Multimedia Subsystem, IMS, domain, the method comprises:
I) receiving, by an Internet Protocol, IP, message gateway, a conventional short message from a conventional short message system, obtaining routing information from a Home Subscriber Server, HSS, selecting an IMS domain according to a policy of an operator or user preference, converting the received conventional short message into a format of SIP-based message and transmitting a SIP-based message converted from the conventional short message;
II) transmitting, by the IP message gateway, the SIP-based message to a configured Short Message/IMS messaging Interworking Application Server, SMI AS, when a checking indicates that the SIP-based message needs to be transmitted to the SMI AS; and
III) converting, by the SMI AS, the received conventional short message into a format of SIP-based message and transmitting a SIP-based message converted from the conventional short message to a user equipment, UE, via the IMS domain.

41. The method according to claim 40, **characterized in that**, after configuring the SMI AS, before the step I), the method further comprises: registering, by the UE in the IMS domain, into the IP message gateway and the SMI AS;
before converting by the SMI AS the received conventional short message into the format of SIP-based message, the method further comprises: obtaining an identity of the UE from the received conventional short message, authorizing interworking service according to subscription information registered by the UE corresponding to the identity, if the authorization is successful, converting the received conventional short message into the format of SIP-based message, otherwise, returning a failure report to the IP message gateway.

42. The method according to claim 41, **characterized in that** registering by the UE in the IMS domain into the IP message gateway and the SMI AS comprises:
sending, by the UE, an IMS registration request containing a capability feature tag identifying whether the UE supports a conventional short message service to the S-CSCF when establishing an Internet Protocol, IP, connection to the IMS domain;
registering, by the UE, onto the S-CSCF and the IP message gateway via an existing registration procedure;
judging, by the S-CSCF according to the capability feature tag, whether the UE supports the conventional short message service and whether a user has subscribed for service level interworking service, if yes, forwarding, by the S-CSCF, the IMS registration request to the SMI AS;
returning, by the SMI AS, a response message indicating successful registration to the S-CSCF and transmitting relevant information to a Home Subscriber Server, HSS.

43. The method according to claim 40, **characterized in that:**
an E/Gd interface is used to connect the SIM AS and the IP message gateway;
after the step I), the method further comprises: packaging, by the IP message gateway, the received conventional short message into a message body of a SIP-based message, and transmitting the SIP-based message packaged with the conventional short message to the S-CSCF;
the checking in the step II) is performed by the S-CSCF according to an initial filtering rule.

44. The method according to claim 43, **characterized in that** the checking that the SIP-based message needs to be transmitted to the SMI AS comprises:
checking, by the S-CSCF, whether the UE has registered onto the SMI AS successfully and whether the UE supports conventional short message protocol stacks, if yes, determining that the SIP-based message needs to be transmitted to the SMI AS;
or,
checking, by the S-CSCF, that a preference of user or a policy of an operator requires service level interworking, to determine that the SIP-based message needs to be transmitted to the SMI AS.

45. The method according to claim 43, **characterized in that** transmitting the SIP-based message converted from the conventional short message to the UE via the IMS domain in step III) comprises:
transmitting, by the SMI AS, the SIP-based message to the S-CSCF, and forwarding, by the S-CSCF, the SIP-based message to the UE;
returning, by the UE, a response indicating successful receipt of the SIP-based message to the S-CSCF, and forwarding, by the S-CSCF, the response indicating successful receipt of the SIP-based message to the SMI AS.

46. The method according to claim 43, **characterized in that** transmitting the SIP-based message converted from the conventional short message to the UE via the IMS domain in step III) comprises:
returning, by the SMI AS, a response 200 OK indicating successful receipt of message to the S-CSCF after converting the received conventional short message into the format of SIP-based message, and forwarding, by the S-CSCF, the response 200 OK indicating successful receipt of message to the IP message gateway;
returning, by the SMI AS, the SIP-based message converted from the conventional short message to the S-CSCF, and delivering, by the S-CSCF, the SIP-based message to the UE;
returning, by the UE, a response indicating successful receipt of the SIP-based message to the S-CSCF, and forwarding, by the S-CSCF, the response indicating successful receipt of the SIP-based message to the SMI AS.

47. The method according to claim 43, **characterized in that,** after the UE receives the SIP-based message converted from the conventional short message successfully, the method further comprises:
generating, by the SMI AS, a delivery report in a format identifiable by the conventional short message system, packaging the delivery report in a message body of a SIP-based message, and transmitting the SIP-based message packaged with the delivery report to the IP message gateway;
transmitting, by the IP message gateway, the de-packaged delivery report to the short message center;
sending, by the short message center, a status report to an Home Subscriber Server, HSS, when receiving the delivery report to update a database of the HSS.

48. The method according to claim 40, **characterized in that:**
a Mobile Application Part, MAP, interface is used to connect the SIM AS and the IP message gateway;
the checking in the step II) is performed by the IP message gateway.

49. The method according to claim 48, **characterized in that** the checking that the SIP-based message needs to be transmitted to the SMI AS in the step II) comprises:
checking, by the IP message gateway, whether the UE has registered onto the SMI AS successfully and whether the UE supports conventional short message protocol stacks, if yes, determining that the SIP-based message needs to be transmitted to the SMI AS;
or,
checking, by the IP message gateway, that a preference of user or a policy of an operator requires service level interworking, to determine that the SIP-based message needs to be transmitted to the SMI AS.

50. The method according to claim 48, **characterized in that** transmitting the SIP-based message converted from the conventional short message to the UE via the IMS domain in step III) comprises:
returning, by the SMI AS, the SIP-based message to the S-CSCF, and delivering, by the S-CSCF, the SIP-based message to the UE via the IMS domain;
returning, by the UE, a response indicating successful receipt of the SIP-based message to the S-CSCF, and forwarding, by the S-CSCF, the response indicating successful receipt of the SIP-based message to the SMI AS.

51. The method according to claim 48, **characterized in that** transmitting the SIP-based message converted from the conventional short message to the UE via the IMS domain in step III) comprises:
returning, by the SMI AS, the SIP-based message converted from the conventional short message to the S-CSCF, and delivering, by the S-CSCF, the SIP-based message to the UE via the IMS domain;
returning, by the UE, a response indicating successful receipt of the SIP-based message to the S-CSCF, and forwarding, by the S-CSCF, the response indicating successful receipt of the SIP-based message to the SMI AS.

52. The method according to claim 48, **characterized in that,** after the UE receives the SIP-based message converted from the conventional short message successfully, the method further comprises:
generating, by the SMI AS, a delivery report in a format identifiable by the conventional short message system, and transmitting the delivery report to the IP message gateway via the MAP interface;
transmitting, by the IP message gateway, the delivery report to the short message center;
sending, by the short message center, a status report to an Home Subscriber Server, HSS, when receiving the delivery report to update a database of the HSS.

53. The method according to claim 40, **characterized in that,** before transmitting by the SMI AS the SIP-based message converted from the conventional short message to the UE via the IMS domain, the method further comprises:
backing up the SIP-based message converted from the conventional short message.

54. A system for interworking between Session Initiation Protocol, SIP, messages and conventional short messages, comprising a conventional short message system, an Internet Protocol Multimedia Subsystem, IMS, core network, an Internet Protocol, IP, message gateway, and user equipments, UEs, **characterized in that**, the system further comprises a message interworking entity, SMI AS, for converting a format of a message,
the IMS core network is adapted to receive a SIP-based message from a UE, and transmitting the SIP-based message to the SMI AS when determining that the SIP-based message needs to be transmitted to the SMI AS;
the IP message gateway is adapted to receive a conventional short message from the conventional short message system, select an IMS core network for forwarding the conventional short message according to a policy of an operator or user preference;
the SMI AS is adapted to convert the received SIP-based message into a format of conventional short message and transmit a conventional short message converted from the SIP-based message to the conventional short message system; and is adapted to convert a received conventional short message into a format of SIP-based message and transmit a SIP-based message converted from the conventional short message to a called UE.

55. The system according to claim 54, **characterized in that:**
when the SMI AS integrates functions of a conventional short message center, the conventional short message system comprises a Home Subscriber Server, HSS, and a Mobile Switching Center (MSC) and/or Serving GPRS Support Node (SGSN) located in a called network, and the SMI AS is connected with the HSS in the called network via a C interface, is connected with the MSC/SGSN in the called network via an E/Gd interface;
when the SMI AS does not integrate the functions of a conventional short message center, the conventional short message system comprises a conventional short message center, the SMI AS is connected to conventional short message center via an E/Gd interface.

56. The system according to claim 54, **characterized in that:**
when an E/Gd interface is used to connect the IP message gateway and the SMI AS, the IP message gateway and the SMI AS exchange messages with each other via the IMS core network; an an ISC interface is used to connect the IP message gateway and the MS core network, and an ISC interface is used to connect the SMI AS and the IMS core network;
when a Mobile Application Part, MAP, interface is used to connect the IP message gateway and the SMI AS, the IP message gateway and the SMI AS exchange messages with each other directly via the MAP interface.

57. The system according to claim 54, **characterized in that** the SMI AS is a newly added independent network entity or a functional module newly added in an existing network entity.

58. A system for interworking between Session Initiation Protocol, SIP, messages and conventional short messages, comprising a conventional short message system, an Internet Protocol Multimedia Subsystem, IMS, core network, and user equipments, UEs, **characterized in that** the system further comprises an Internet Protocol, IP, message gateway capable of massage format conversion,
the IMS core network is adapted to receive a SIP-based message from a UE, and transmit the SIP-based message to the IP message gateway when determining that the SIP-based message needs to be transmitted to the IP message gateway; and
the IP message gateway is adapted to convert the received SIP-based message into a conventional short message and transmit the conventional short message converted from the SIP-based message to the conventional short message system; and is adapted to convert a received conventional short message into a SIP-based message and transmit the SIP-based message converted from the conventional short message to a called UE via the IMS core network.

59. The system according to claim 58, **characterized in that:**
when the IP message gateway integrates functions of a conventional short message center, the conventional short message system comprises a Home Subscriber Server, HSS, and a Mobile Switching Center (MSC) and/or Serving GPRS Support Node (SGSN) located in a called network, and the IP message gateway is connected with the HSS in the called network via a C interface, is connected with the MSC/SGSN in the called network via an E/Gd interface;
when the IP message gateway does not integrate the functions of a conventional short message center, the conventional short message system comprises a conventional short message center, the IP message gateway is connected to conventional short message center via an E/Gd interface.

60. A system for interworking between Session Initiation Protocol, SIP, messages and conventional short messages, comprising a conventional short message system, an Internet Protocol Multimedia Subsystem, IMS, core network, and user equipments, UEs, **characterized in that** the system further comprises a message interworking entity, SMI AS, capable of converting a format of a message,
the SMI AS is adapted to connect to the IMS core network via an ISC interface;
the SMI AS is adapted to interact inforamtion with a conventional short message system in a calling network when an IMS domain of the SMI AS serves as an originating domain; and is adapted to interact information with a conventional short message system in a called network when an IMS domain of the SMI AS serves as a terminating domain.

61. The system according to claim 60, **characterized in that:**
if the IMS domain of the SMI AS serves as the originating domain, when the SMI AS integrates functions of a conventional short message center, the conventional short message system comprises a Home Subscriber Server, HSS, and a Mobile Switching Center (MSC) and/or Serving GPRS Support Node (SGSN) located in a called network, and the SMI AS is connected with the HSS in the called network via a C interface, is connected with the MSC/SGSN in the called network via an E/Gd interface;
when the SMI AS does not integrate the functions of a conventional short message center, the conventional short message system comprises a conventional short message center in a calling network, the SMI AS is connected to conventional short message center in the calling network via an E/Gd interface;
if the IMS domain of the SMI AS serves as the originating domain,, the SIM AS is connected with a conventional short message routing entity in the called network via a Mobile Application Part, MAP, interface.

62. The system according to claim 61, **characterized in that** the system further comprises an intermediary router entity, and when the IMS domain of the SMI AS serves as the originating domain,, the SIM AS is connected with the conventional short message routing entity in the called network via the intermediary router entity.

63. The system according to claim 61, **characterized in that** the conventional short message routing entity comprises a Gateway Mobile Switching Center, GMSC, and/or a Short Message Service Interworking Mobile Switching Center, SMS-IWMSC.

64. The system according to claim 60, **characterized in that** the SMI AS is a newly added independent network entity or a functional module newly added in an existing network entity.

65. A message interworking entity, comprising a storing and forwarding module, a message converting module and a service authorization module, wherein:
the storing and forwarding module is adapted to receive a message transmitted from a network side and send a service authorization request to the service authorization module; to receive an authorization response indicating a successful authorization from the service authorization module and forward the message from the network side to the message converting module; to receive a message returned from the message converting module, determine the format of the message returned from the message converting module, and deliver the message returned from the message converting module to a network side capable of processing the format of the message;
the service authorization module is adapted to check subscription information of a user when receiving the service authorization request and return an authorization response to the storing and forwarding module; and
the message converting module is adapted to receive the message forwarded from the storing and forwarding module, convert the format of the message forwarded from the storing and forwarding module, and return a message in the converted format to the storing and forwarding module.

66. The message interworking entity according to claim 65, **characterized in that** the storing and forwarding module is further adapted to receive an authorization response indicating a failed authorization from the service authorization module and return a response indicating failure to the network side transmitting the message.

67. The message interworking entity according to claim 65, **characterized in that** the storing and forwarding module, the message converting module and the service authorization module are located in a same physical entity or in different physical entities.

68. The message interworking entity according to claim 65, **characterized in that** the storing and forwarding module comprises:
a first storing and forwarding sub-module, adapted to receive a message transmitted from an Internet Protocol Multimedia Subsystem, IMS, domain and send a service authorization request to the service authorization module; to receive an authorization response indicating a successful authorization from the service authorization module and forward the message from the IMS domain to the message converting module; to receive a message returned from the message converting module, determine the format of the message returned from the message converting module, and deliver the message returned from the message converting module to a conventional short message domain; to receive an authorization response indicating a failed authorization from the service authorization module and return a failure report; and
a second storing and forwarding sub-module, adapted to receive a message transmitted from a conventional short message domain and send a service authorization request to the service authorization module; to receive an authorization response indicating a successful authorization from the service authorization module and forward the message from the conventional short message domain to the message converting module; to receive a message returned from the message converting module, determine the format of the message returned from the message converting module, and deliver the message returned from the message converting module to an Internet Protocol Multimedia Subsystem, IMS, domain; to receive an authorization response indicating a failed authorization from the service authorization module and return a failure report.

69. The message interworking entity according to claim 68, **characterized in that** the message converting module comprises:
a first sub-module for message converting, adapted to receive a SIP-based message forwarded from the first storing and forwarding sub-module, convert the SIP-based message into a conventional short message, and return the conventional short message converted from the SIP-based message to the first storing and forwarding sub-module; and
a second sub-module for message converting, adapted to receive a conventional short message forwarded from the second storing and forwarding sub-module, convert the conventional short message into a SIP-based message, and return the SIP-based message converted from the conventional short message to the second storing and forwarding sub-module.

70. The message interworking entity according to claim 69, **characterized in that** the first storing and forwarding sub-module, the second storing and forwarding sub-module, the first sub-module for message converting and the second sub-module for message converting are located in a same physical entity or in different physical entities.

71. A message interworking entity, comprising a storing and forwarding module, a message converting module and a service authorization module, wherein:
the storing and forwarding module is adapted to send a service authorization request to the service authorization module when receiving a conventional short message from a conventional short message domain; to receive an authorization response indicating a successful authorization from the service authorization module and forward the received conventional short message to the message converting module; to forward a conventional short message from the message converting module to the conventional short message domain when receiving the conventional short message from the message converting module;
the service authorization module is adapted to check subscription information of a user when receiving a service authorization request and return an authorization response to the storing and forwarding module or the message converting module; and
the message converting module is adapted to receive the conventional short message forwarded from the storing and forwarding module, convert the conventional short message forwarded from the storing and forwarding module into a format of SIP-based message, and forward a SIP-based message converted from the conventional short message forwarded from the storing and forwarding module to an IMS domain, and to receive a SIP-based message from the IMS domain and send a service authorization request to the service authorization module, receive an authorization response indicating a successful authorization returned from the service authorization module, convert the SIP-based message from the IMS domain into a format of conventional short message and transmit the conventional short message converted from the SIP-based message from the IMS domain to the storing and forwarding module.

72. The message interworking entity according to claim 71, **characterized in that**:
the storing and forwarding module is further adapted to receive an authorization response indicating a failed authorization from the service authorization module and return a response indicating failure to the conventional short message domain; and
the message converting module is further adapted to receive an authorization response indicating a failed authorization from the service authorization module and return a response indicating failure to the IMS domain.

73. The message interworking entity according to claim 71, **characterized in that** the storing and forwarding module is further adapted to store the conventional short message from the message converting module according to a policy of an operator before forwarding the conventional short message from the message converting module to the conventional short message domain.

74. The message interworking entity according to claim 71, **characterized in that** the storing and forwarding module, the message converting module and the service authorization module are located in a same physical entity or in different physical entities.

75. A system for processing message delivery reports during interworking between Session Initiation Protocol, SIP, messages and conventional short messages, comprising a user equipment, UE, in an Internet Protocol Multimedia Subsystem, IMS, domain, a UE supporting conventional short messages, an entity for message interworking and a short message center, wherein:
when the UE in the IMS domain is calling:
the entity for message interworking is adapted to receive a SIP-based message containing a request message delivery indicator from the calling UE in the IMS domain, convert the received SIP-based message into a conventional short message, and transmit the conventional short message, converted from the SIP-based message and containing information indicating that the calling UE requests to receive a message delivery report, to the short message center; receive a message delivery report based on the format of conventional short message, convert the message delivery report based on the format of conventional short message into a SIP-based message delivery report, and send the SIP-based message delivery report to the calling UE;
the short message center is adapted to forward the conventional short message to the called UE, receive a message delivery report based on the format of conventional short message, and transmit the received message delivery report based on the format of conventional short message to the entity for message interworking;
when the UE in the IMS domain is called:
the entity for message interworking is adapted to convert a conventional short message, when receiving the conventional short message from a short message center, into a SIP-based message containing a request message delivery indicator and transmit the SIP-based message to the called UE in the IMS domain; receive a SIP-based message delivery report containing status information and convert the SIP-based message delivery report containing the status information into a message delivery report based on the format of conventional short message, and transmit the message delivery report based on the format of conventional short message to the short message center,
the called UE in the IMS domain is adapted to construct the SIP-based message delivery report containing the status information when receiving the SIP-based message containing the request message delivery indicator, and send the SIP-based message delivery report to the entity for message interworking.

76. The system according to claim 75, **characterized in that** the entity for message interworking is further adapted to determine, when receiving a message, whether the received message supports format conversion and needs format conversion before format conversion of the message.

77. The system according to claim 75, **characterized in that**
the format of conventional short message comprises a Mobile Application Part, MAP, message; and
the SIP-based message delivery report is implemented by an immediate message disposition notification.

78. An entity for message interworking, comprising an information receiving unit, a format converting and controlling unit and an information transmitting unit, wherein:
the information receiving unit is adapted to receive a SIP-based message containing a request message delivery indicator from a calling user equipment, UE, in an Internet Protocol Multimedia Subsystem, IMS, domain and send the received SIP-based message to the format converting and controlling unit; to receive a message delivery report based on the format of conventional short message and send the message delivery report based on the format of conventional short message to the format converting and controlling unit;
the format converting and controlling unit is adapted to convert the received SIP-based message into a conventional short message, and transmit the conventional short message, converted from the SIP-based message and containing information indicating that the calling UE requests to receive a message delivery report, to the information transmitting unit; to convert the received message delivery report based on the format of conventional short message into a SIP-based message delivery report, and send the SIP-based message delivery report to the information transmitting unit; and
the information transmitting unit is adapted to transmit the conventional short message converted from the SIP-based message to a short message center; and to transmit the SIP-based message delivery report to the calling UE;
or,
the information receiving unit is adapted to receive a conventional short message from the short message center and send the received conventional short message to the format converting and controlling unit; to receive a SIP-based message delivery report containing status information and send the SIP-based message delivery report to the format converting and controlling unit;
the format converting and controlling unit is adapted to convert the received conventional short message into a SIP-based message containing a request message delivery indicator, and transmit the SIP-based message converted from the conventional short message to the information transmitting unit; to convert the received SIP-based message delivery report into a message delivery report based on the format of conventional short message, and send the message delivery report based on the format of conventional short message to the information transmitting unit; and
the information transmitting unit is adapted to transmit the SIP-based message converted from the conventional short message to a called UE; and transmit the message delivery report based on the format of conventional short message to the short message center.

79. The entity for message interworking according to claim 78, **characterized by** further comprising: an authentication unit adapted to receive a message from the information receiving unit, and send the received message to the format converting and controlling unit after determining that the received message supports format conversion and the format conversion is needed.

80. The entity for message interworking according to claim 78, **characterized in that**
the format of conventional short message comprises a Mobile Application Part, MAP, message; and
the SIP-based message delivery report is implemented by an immediate message disposition notification.

81. A user equipment, **characterized by** comprising a transmitting and receiving unit and a constructing unit, wherein:
the transmitting and receiving unit is adapted to receive a Session Initiation Protocol, SIP, message containing a request message delivery indicator and send the SIP message to the constructing unit; to receive a SIP-based message delivery report from the constructing unit and transmit the message delivery report; and
the constructing unit is adapted to construct the SIP-based message delivery report containing status information according to the received SIP message and send the constructed message delivery report to the transmitting and receiving unit.

82. The user equipment according to claim 81, **characterized in that**
the SIP-based message delivery report is implemented by an immediate message disposition notification.
